# EUROPEAN PATENT APPLICATION

(11) **EP 4 632 385 A1**
(43) Date of publication of application: **15.10.2025**
(21) Application number: 25164072.8
(22) Date of filing: 17.03.2025
(51) Int. Cl.: G01N 35/00

(54) **SAMPLE ANALYSIS SYSTEM AND CONSUMABLE MANAGER**

(30) Priority: 18.03.2024 JP 2024042343
(71) Applicant: SYSMEX CORPORATION, Kobe-shi Hyogo 651-0073 (JP)
(72) Inventor: Nishikawa, Ken, Kobe-shi, Hyogo, 651-0073 (JP); Kumagai, Atsushi, Kobe-shi, Hyogo, 651-0073 (JP); Fukuma, Daigo, Kobe-shi, Hyogo, 651-0073 (JP); Nagai, Takaaki, Kobe-shi, Hyogo, 651-0073 (JP); Shoji, Nobuo, Kobe-shi, Hyogo, 651-0073 (JP)
(74) Representative: Hoffmann Eitle

(57) **Abstract**

Disclosed is a sample analysis system (1) comprising a plurality of sample analyzers (3,4,5) configured to analyze samples by using consumables (201-205, 211-216), and a consumable manager (2) configured to manage a replacement timing of the consumables in each of the sample analyzers (3,4,5), wherein the consumable manager (2) comprises a controller (301), a storage (310), and an interface (302, 303) for an input and an output of information, wherein the controller (301) is configured to obtain a usage record of the consumables from each of the sample analyzers (3,4,5) and store the usage record in the storage (310), receive, via the interface (302, 303), an input specifying a desired period among multiple periods of different lengths of time including (i) a period longer than a day and (ii) a period of a day or shorter, and provide, via the interface (302, 303), information regarding a predicted replacement timing of the consumables during the desired period based on the usage record.

## Description

### CROSS REFERENCE TO RELATED APPLICATIONS

This application claims priority from prior Japanese Patent Application No. 2024-042343, filed on March 18, 2024, entitled "MANAGEMENT METHOD, MANAGEMENT DEVICE, SAMPLE ANALYSIS SYSTEM, AND PROGRAM, the entire content of which is incorporated herein by reference.

### FIELD OF THE INVENTION

The present invention relates to a sample analysis system and a consumable manager.

### BACKGROUND OF THE INVENTION

Conventionally, in a sample analyzer, a sample is analyzed using consumables installed in a sample analyzer by a user such as an operator. The consumables are, for example, reagents. In the sample analyzer, when the remaining amount of the installed reagents is insufficient, an analysis of a sample is interrupted. Therefore, the user needs to replace the reagents installed in the sample analyzer as appropriate.

Chinese Patent Application Publication No. 115343489 describes a method for replenishing reagents on the day or the following day. In this method, the following are proposed. (1) Compare a daily reagent demand for each project with a current reagent remaining amount. (2) Subtracts the current reagent remaining amount from a current reagent demand. (3) Indicate a replenishment of the reagent. Further, Japanese Patent Publication No. 2014-89129 describes a sample analyzer that performs the following operations. (1) Receives a time period (night and holiday settings) during which a user after a takeover operates the sample analyzer. (2) If there is a possibility that reagents may be insufficient during the time period, a message indicating that is displayed.

In the method as described above, the replenishment of the consumables on the day or the next day can be presented to the user. In the method as described above, it is possible to present a possibility of shortage of consumables in a time period at night after the takeover to a user before the takeover. However, requirements regarding replacements of consumables may vary depending on purposes of users. Each user wants to know a predicted replacement timing of the consumables according to his/her own purpose. However, the above-described method cannot flexibly meet the requirements of each of such users.

### SUMMARY OF THE INVENTION

The scope of the present invention is defined solely by the appended claims, and is not affected to any degree by the statements within this summary.

The present disclosure relates to a sample analysis system (1) comprising a plurality of sample analyzers (3,4,5) configured to analyze samples by using consumables (201-205, 211-216), and a consumable manager (2) configured to manage a replacement timing of the consumables in each of the sample analyzers (3,4,5), wherein the consumable manager (2) comprises a controller (301), a storage (310), and an interface (302, 303) for an input and an output of information, wherein the controller (301) is configured to obtain a usage record of the consumables from each of the sample analyzers (3,4,5) and store the usage record in the storage (310), receive, via the interface (302, 303), an input specifying a desired period among multiple periods of different lengths of time including (i) a period longer than a day and (ii) a period of a day or shorter, and provide, via the interface (302, 303), information regarding a predicted replacement timing of the consumables during the desired period based on the usage record.

A user of the sample analysis system wants to know, for example, a timing at which the consumables will be replaced during a relatively short period of time, such as today and tomorrow, based on a relationship between the user and his/her successor. On the other hand, an administrator who orders the consumables wants to know at which timing the consumables will be replaced during a relatively long period of time, such as a week or a month, in consideration of a inventory status of the consumables at his/her own facility, a lead time from an ordering of the consumables to an arrival of the consumables, and the like. As described above, the period in which the replacement timing of the consumables is desired to be grasped is different for each of the various users. According to the sample analysis system of the present disclosure, it is possible to receive an input of a desired period from each user and to provide the user a timing at which the replacement timing may come during the desired period. Therefore, it is possible to flexibly fulfill requirements of each user regarding the predicted replacement timing of the consumables.

### BRIEF DESCRIPTION OF THE DRAWINGS

FIG. 1 is a diagram according to an embodiment. FIG. 1 is a diagram schematically illustrating a configuration of a sample analysis system.
FIG. 2 is a diagram according to the embodiment. FIG. 2 is a diagram schematically illustrating a configuration of a blood cell analyzer viewed from a front.
FIG. 3 is a diagram according to the embodiment. FIG. 3 is a perspective view schematically illustrating a configuration of a reagent container used for measurement in a measurement apparatus.
FIG. 4 is a diagram according to the embodiment. FIG. 4 is a block diagram illustrating a functional configuration of the management apparatus.
FIG. 5 is a diagram according to the embodiment. FIG. 5 is a block diagram illustrating a functional configuration of a blood cell analyzer.
FIG. 6 is a diagram according to the embodiment. FIG. 6 is a block diagram illustrating a functional configuration of a smear preparation apparatus and a dosing apparatus.
FIG. 7 is a diagram according to the embodiment. FIG. 7 is a diagram schematically illustrating a configuration of a first reagent usage amount database regarding a reagent amount used in sample measurement of the measurement apparatus.
FIG. 8 is a diagram according to the embodiment. FIG. 8 is a diagram schematically illustrating a configuration of a second reagent usage amount database regarding a reagent amount used when the measurement apparatus is started, a third reagent usage amount database regarding a reagent amount used when the measurement apparatus is automatically washed, and a fourth reagent usage amount database regarding a reagent amount used when the measurement apparatus is shut down.
FIG. 9 is a diagram according to the embodiment. FIG. 9 is a diagram schematically illustrating a configuration of an operation log of the measurement apparatus.
FIG. 10 is a diagram according to the embodiment. FIG. 10 is a diagram schematically illustrating a configuration of a reagent database related to reagents installed in the measurement apparatus.
FIG. 11 is a diagram according to the embodiment. FIG. 11 is a diagram schematically illustrating a configuration of reagent usage pattern information of the measurement apparatus.
FIG. 12 is a diagram according to the embodiment. FIG. 12 is a diagram schematically illustrating a configuration of reagent usage pattern information of the measurement apparatus.
FIG. 13 is a diagram according to the embodiment. FIG. 13 is a diagram schematically illustrating a configuration of a reagent management screen displayed on a display input unit of the control device.
FIG. 14 is a diagram according to the embodiment. FIG. 14 is a diagram schematically illustrating a configuration of a setting screen.
FIG. 15 is a diagram according to the embodiment. FIG. 15 is a diagram illustrating an example of a display condition set in a display condition setting region.
FIG. 16 is a diagram according to the embodiment. FIG. 16 is a diagram schematically illustrating a configuration of a predicted replacement timing display screen in a case where a month display is selected in the setting screen.
FIG. 17 is a diagram according to the embodiment. FIG. 17 is a diagram schematically illustrating a configuration of a predicted replacement timing display screen in a case where a week display is selected in the setting screen.
FIG. 18 is a diagram according to the embodiment. FIG. 18 is a diagram schematically illustrating a configuration of a predicted replacement timing display screen in a case where a date display is selected in the setting screen.
FIG. 19 is a diagram according to the embodiment. FIG. 19 is a diagram schematically illustrating a configuration of a predicted replacement timing display screen in a case where a date display is selected in the setting screen.
FIG. 20 is a diagram according to the embodiment. FIG. 20 is a diagram schematically illustrating a configuration of a predicted replacement timing display screen in a case where a time display is selected in the setting screen and four hours are set as a time interval.
FIG. 21 is a diagram according to the embodiment. FIG. 21 is a diagram schematically illustrating a configuration of a predicted replacement timing display screen in a case where a time display is selected in the setting screen and four hours are set as a time interval.
FIG. 22 is a diagram according to the embodiment. FIG. 22 is a flowchart illustrating a reagent container replacement process.
FIG. 23 is a diagram according to the embodiment. FIG. 23 is a flowchart illustrating a process of updating the reagent remaining amount.
FIG. 24 is a diagram according to the embodiment. FIG. 24 is a flowchart illustrating a process of updating the reagent usage pattern information by the management apparatus.
FIG. 25 is a diagram according to the embodiment. FIG. 25 is a flowchart illustrating a notification process of a predicted replacement timing performed by the management apparatus.
FIG. 26 is a diagram according to a first modification. FIG. 26 is a diagram schematically illustrating a configuration of a highlighting setting screen.
FIG. 27 is a diagram according to the first modification. FIG. 27 is a diagram schematically illustrating a state in which the predicted replacement timing is highlighted;
FIG. 28 is a diagram according to the first modification. FIG. 28 is a flowchart illustrating a highlighting reception process performed by the management apparatus.
FIG. 29 is a diagram according to a second modification. FIG. 29 is a diagram schematically illustrating a configuration of a non-business day and time setting screen.
FIG. 30 is a diagram according to the second modification. FIG. 30 is a flowchart illustrating a process of moving the predicted replacement timing by the management apparatus.
FIG. 31 is a diagram according to the second modification. FIG. 31 is a diagram schematically illustrating a configuration of the predicted replacement timing display screen in a case where a normal setting and a custom setting are performed on the non-business date and time setting screen.
FIG. 32 is a diagram according to a third modification. FIG. 32 is a diagram schematically illustrating a configuration of a reagent database related to reagents installed in the measurement apparatus.
FIG. 33 is a diagram according to the third modification. FIG. 33 is a diagram schematically illustrating a configuration of a lead period setting screen.
FIG. 34 is a diagram according to the third modification. FIG. 34 is a flowchart illustrating a lead period reception process performed by the management device.
FIG. 35 is a diagram according to the third modification. FIG. 35 is a diagram schematically illustrating a configuration of the predicted replacement timing display screen in a case where the lead period is set on the lead period setting screen.
FIG. 36 is a diagram according to a fourth modification. FIG. 36 is a diagram schematically illustrating a configuration of the predicted replacement timing display screen in a case where the month display is selected in the setting screen.
FIG. 37 is a diagram according to a fifth modification. FIG. 37 is a diagram schematically illustrating a configuration of the setting screen.
FIG. 38 is a diagram according to the fifth modification. FIG. 38 is a diagram schematically illustrating a configuration of the predicted replacement timing display screen in a case where the month display is selected on a setting screen and a start date and time and an end date and time are set.

### DETAILED DESCRIPTION

The following embodiments apply the present invention to a management method for managing a replacement timing of consumables in a sample analyzer, a management apparatus and a sample analysis system, and a program for causing a computer to execute a process for managing a replacement timing of consumables in a sample analyzer. The consumables are those in which a remaining amount decreases depending on a use and those in which the consumables cannot be used depending on the use. In the embodiment, the consumables are reagents, but are not limited thereto, and may be cuvettes, pipette tips, paper, ink ribbons, or the like.

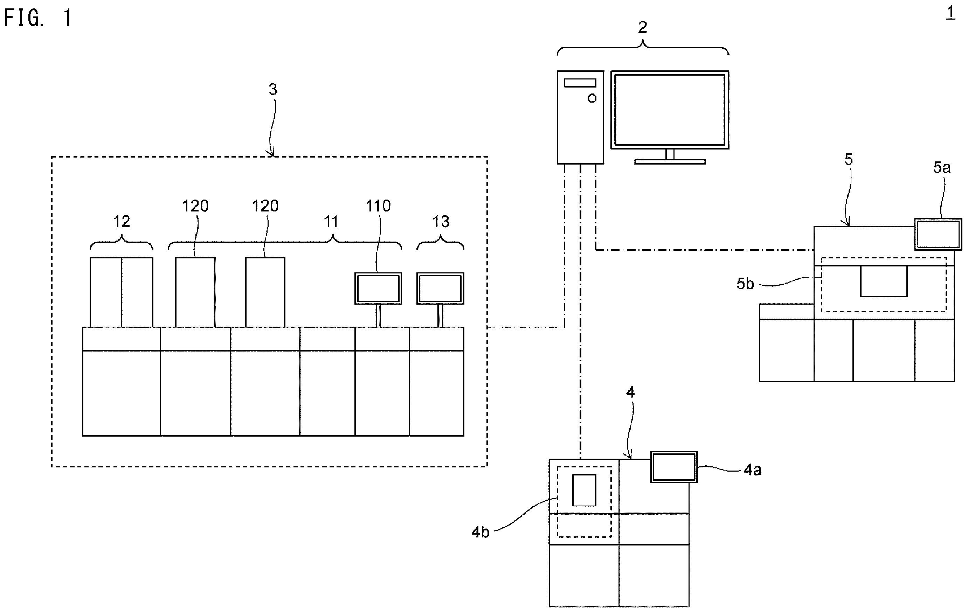

FIG. 1 is a diagram schematically illustrating a configuration of a sample analysis system 1.

The sample analysis system 1 is a system that measures a sample and analyzes the sample based on a measurement result. The sample analysis system 1 includes a management device 2, a blood cell analyzer 3, a blood coagulation analyzer 4, and an immunoassay analyzer 5. The sample analysis system 1 is disposed in a facility such as a hospital, for example.

The blood cell analyzer 3 includes a blood cell counter 11, a smear preparator 12, and a conveyance controller 13. The blood cell counter 11 includes a control device 110 and two measurement devices 120. The sample to be analyzed by the blood cell analyzer 3 is whole blood collected from a subject. A reagent container containing a reagent used for measurement is connected to the measurement device 120. The measurement device 120 measures a measurement sample obtained by mixing a sample and a reagent. The control device 110 analyzes measurement data of the measurement device 120 and generates an analysis result of the sample for various items related to blood cells such as red blood cells, white blood cells, and platelets. A reagent container containing a reagent used for preparing a smear is connected to the smear preparator 12. The smear preparator 12 prepares the smear of the sample. The conveyance controller 13 controls a transport of the sample in the blood cell analyzer 3.

The blood coagulation analyzer 4 includes a controller 4a and a measurement device 4b. The sample to be analyzed by the blood coagulation analyzer 4 is plasma or serum collected from a subject. A reagent container containing a reagent used for measurement is connected to the measurement device 4b. The measurement device 4b measures a measurement sample obtained by mixing the sample and the reagent based on, for example, a coagulation method, a chromogenic substrate assay method, an immuno-nephelometry method, or an agglutination method. The controller 4a analyzes measurement data of the measurement device 4b and generates an analysis result of the sample for various items related to blood coagulation.

The immunoassay analyzer 5 includes a controller 5a and a measurement device 5b. Samples to be analyzed by the immunoassay analyzer 5 include whole blood, plasma, serum, and cerebrospinal fluid (CSF) collected from a subject. A reagent container containing a reagent used for measurement is connected to the measurement analyzer 5. The measurement device 5b measures a measurement sample obtained by mixing the sample and the reagent. The controller 5a analyzes measurement data of the measurement device 5b and generates an analysis result of the sample for various items such as hepatitis B, hepatitis C, a tumor marker, a thyroid hormone, and a dementia marker.

The management device 2 is communicably connected to the blood cell analyzer 3, the blood coagulation analyzer 4, and the immunoassay analyzer 5. The management device 2 receives an input of a type (discipline) of the device, a type of the reagent, and a period from a user. The management device 2 notifies information regarding a timing (hereinafter, referred to as a "predicted replacement timing") when a target reagent is in shortage in the received period. In response to the notification, the user removes the predetermined reagent containers installed in the blood cell analyzer 3, the blood coagulation analyzer 4, and the immunoassay analyzer 5 at appropriate timings and installs new reagent containers. Hereinafter, the notification processing regarding the predicted replacement timing will be described with reference to the configurations and the processing of the management device 2 and the blood cell analyzer 3.

Since the notification processing regarding the blood coagulation analyzer 4 and the immunoassay analyzer 5 is substantially the same as that of the blood cell analyzer 3, only the notification processing regarding the blood cell analyzer 3 will be described below.

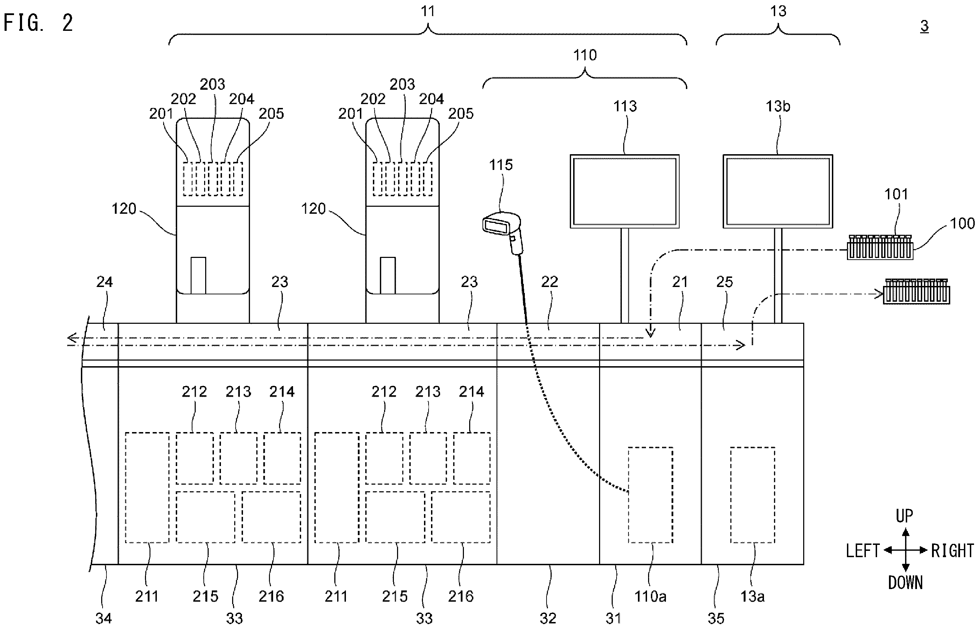

FIG. 2 is a diagram schematically illustrating a configuration of the blood cell analyzer 3 viewed from the front.

The blood cell analyzer 3 includes a blood cell counter 11, a smear preparator 12, a conveyance controller 13, a loading device 21, a preprocessing device 22, two conveyers 23, a conveyer 24, and a collection device 25. Further, the blood cell analyzer 3 includes storage units 31, 32, 34, and 35 and two storage units 33. The storage units 31 to 35 are wagons that can store articles therein. In FIG. 2, for the sake of convenience, the illustration of the smear preparation apparat preparator 12 is omitted, and only a part of the conveyer 24 and the storage unit 34 is illustrated.

The blood cell counter 11 includes a control device 110 and two measurement devices 120. The control device 110 includes a main body 110a, a display and input unit 113 including a touch panel type display, and a handheld bar code reader 115. The user can input an instruction to the main body 110a by operating the display and input unit 113. The main body 110a is housed in the storage unit 31. The display and input unit 113 is installed at an upper portion of the storage unit 31. The measurement device 120 is installed at an upper portion of the storage unit 33.

The smear preparator 12 (see FIG. 1) is installed at an upper portion of the storage unit 34.

The conveyance controller 13 includes a main body 13a and a display and input unit 13b formed of a touch panel type display. The user can input an instruction to the main body 13a by operating the display and input unit 13b. The main body 13a is housed in the storage unit 35. The display and input unit 13b is installed at an upper portion of the storage unit 35.

The loading device 21 is installed at an upper portion of the storage unit 31. The preprocessing device 22 is installed at an upper portion of the storage unit 32. The conveyers 23 are installed at an upper portion of the storage units 33. The conveyer 24 is installed at an upper portion of the storage unit 34. The collection device 25 is installed at an upper portion of the storage unit 35. The collection device 25, the loading device 21, the preprocessing device 22 and the two conveyers 23, and the conveyer 24 are arranged adjacent to each other in the leftward direction in this order.

Reagent containers 201 to 205 used for measurement by the measurement device 120 are housed inside the measurement device 120. Reagent containers 211 to 216 used for measurement by the measurement device 120 are housed inside the storage unit 33 below the measurement devices 120. Each of the reagent containers 211 to 216 is connected to the measurement device 120 via a tube. Similarly, reagent containers used by the smear preparator 12 to prepare a smear is stored inside the storage unit 34 below the smear preparator 12. Each of the reagent containers in the storage unit 34 is connected to the smear preparator 12 via a tube.

A sample container 101 contains a sample. The sample rack 100 is configured to hold the plurality of sample containers 101. When the sample rack 100 holding the sample containers 101 is set in the loading device 21 by the user, the sample rack 100 is conveyed leftward by the loading device 21 and the preprocessing device 22. Thereafter, the sample rack 100 is conveyed by the conveyers 23 and 24 to the measurement device 120 and the smear preparator 12 as appropriate. Thereafter, the samples in the sample containers 101 are supplied to the measurement device 120 and the smear preparator 12 as appropriate. Thereafter, the sample rack 100 is conveyed to the collection device 25 and is removed from the collection device 25 by the user. Thus, the measurements of the samples in the sample containers 101 held in the sample rack 100 are completed.

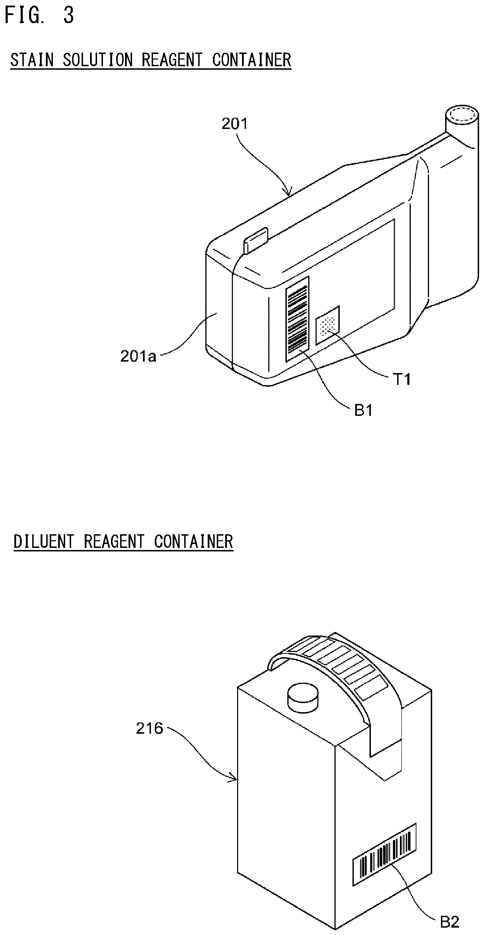

FIG. 3 is a perspective view schematically illustrating a configuration of reagent containers 201, 216 used for measurement by the measurement device 120.

As illustrated in an upper part of FIG. 3, the reagent container 201 includes a main body 201a containing a reagent therein, a barcode label B1, and an RFID tag T1. The barcode label B1 and the RFID tag T1 are attached to a side surface of the main body 201a. A barcode indicating reagent information is printed on the barcode label B1. The reagent information is, for example, any of a lot number, an expiration date, a reagent name (a reagent type), a reagent container capacity (a reagent amount in a new reagent container), and a serial number. The RFID tag T1 also includes the reagent information similar to the barcode label B1.

The other reagent containers 202 to 205 are also configured in the same manner as the reagent container 201, and are attached with the barcode label B1 and the RFID tag T1.

In the embodiment, for example, the reagent containers 201 to 205 contain staining solutions (hereinafter, referred to as staining solutions A, B, D, E, and C, respectively). The staining solution contained in the reagent containers 201 to 205 are, for example, Fluorocell (registered trademark) WNR, Fluorocell (registered trademark) WDF, Fluorocell (registered trademark) RET, Fluorocell (registered trademark) PLT, Fluorocell (registered trademark) WPC, Fluorocell (registered trademark) WNR, Fluorocell (registered trademark) WDF, Fluorocell (registered trademark) RET, Fluorocell (registered trademark) PLT, and Fluorocell (registered trademark) WPC manufactured by Sysmex Corporation.

As shown in a lower part of FIG. 3, the reagent container 216 includes a main body 216a containing a reagent therein and a barcode label B2. The barcode label B2 is attached to a side surface or an upper surface of the main body 216a. The barcode label B2 is printed with a barcode indicating reagent information regarding the reagent contained in the reagent container 216. The reagent information is, for example, any of a lot number, an expiration date, a reagent name (a reagent type), a reagent container capacity (a reagent amount in a new reagent container), and a serial number.

Note that the other reagent containers 211 to 215 are also configured in the same manner as the reagent container 216 although having a slightly different shape and size, and are attached with the barcode label B2.

In the embodiment, for example, the reagent containers 211, 213 contain diluents (hereinafter, referred to as diluents A and B, respectively). The reagent containers 212, 214, 215, 216 contain hemolytic agents (hereinafter, referred to as hemolytic agents A, D, B, and C, respectively). The diluents contained in the reagent containers 211, 213 are, for example, CellPack(registered trademark) DCL and CellPack(registered trademark) DFL. Both CellPack(registered trademark) DCL and CellPack(registered trademark) DFL are manufactured by Sysmex Corporation. The hemolytic agents contained in the reagent containers 212, 214, 215, 216 are, for example, Sulfolyzer (registered trademark), LyzerCell (registered trademark) WPC, LyzerCell (registered trademark) WNR, and LyzerCell (registered trademark) WDF II. All of Sulfolyzer (registered trademark), LyzerCell (registered trademark) WPC, LyzerCell (registered trademark) WNR, and LyzerCell (registered trademark) WDF II are manufactured by Sysmex Corporation.

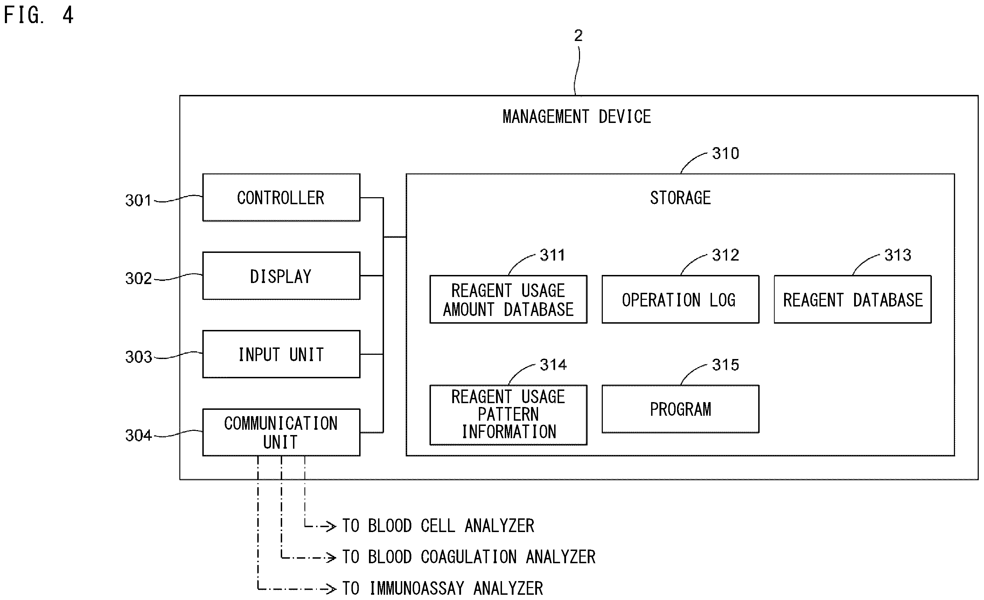

FIG. 4 is a block diagram illustrating a functional configuration of the management device 2.

The management device 2 is a consumable manager configured to manage a replacement timing of consumables in each of a plurality of sample analyzers. The management device 2 includes a controller 301, a storage 310, a display 302, an input unit 303, and a communication unit 304.

The controller 301 includes, for example, a CPU. The controller 301 executes a program 315 stored in the storage 310 to execute various kinds of processing. The program 315 is a computer program. The storage 310 includes, for example, an SSD or an HDD. The storage 310 stores a reagent usage amount database 311, an operation log 312, a reagent database 313, reagent usage pattern information 314, and the program 315.

Here, the right measurement device 120, the left measurement device 120, the smear preparator 12, the measurement device 4b of the blood coagulation analyzer 4, and the measurement device 5b of the immunoassay analyzer 5 are each referred to as a processing module.

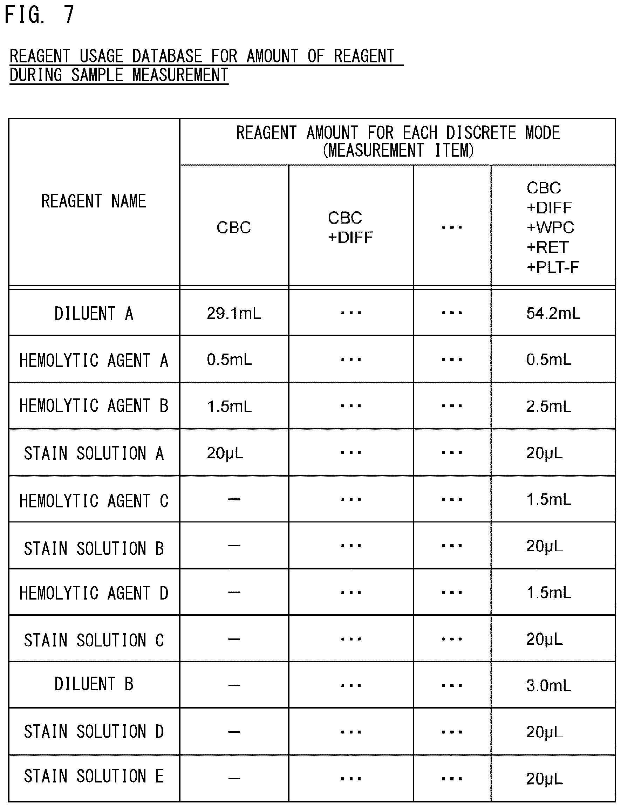

The reagent usage amount database 311 includes multiple reagent usage amount databases. Each of the reagent usage amount databases stores a reagent amount used for each process for each processing module. The operation log 312 includes multiple operation logs. Each of the plurality of operation logs stores an operation content of the processing module for each processing module. The operation log includes information of a usage record of the consumables. The reagent database 313 includes multiple reagent databases. Each of the reagent databases stores information regarding installed reagents for each processing module. The reagent usage pattern information 314 includes multiple pieces of reagent usage pattern information. Each of the plurality of reagent usage pattern information includes information of a pattern in which a reagent is used for each processing module. The reagent usage amount database 311, the operation log 312, the reagent database 313, and the reagent usage pattern information 314 will be described later with reference to FIGs. 7 to 12.

The display 302 includes, for example, a liquid crystal display or an organic EL display. The input unit 303 includes, for example, a mouse and a keyboard. Note that the display 302 and the input unit 303 may be integrally configured as a touch panel display. The display 302 and the input unit 303 is an interface for an input and an output of information. The communication unit 304 includes a connection terminal based on the Ethernet standard. The communication unit 304 is connected to the blood cell analyzer 3, the blood coagulation analyzer 4, and the immunoassay analyzer 5 via a communication network such as a LAN.

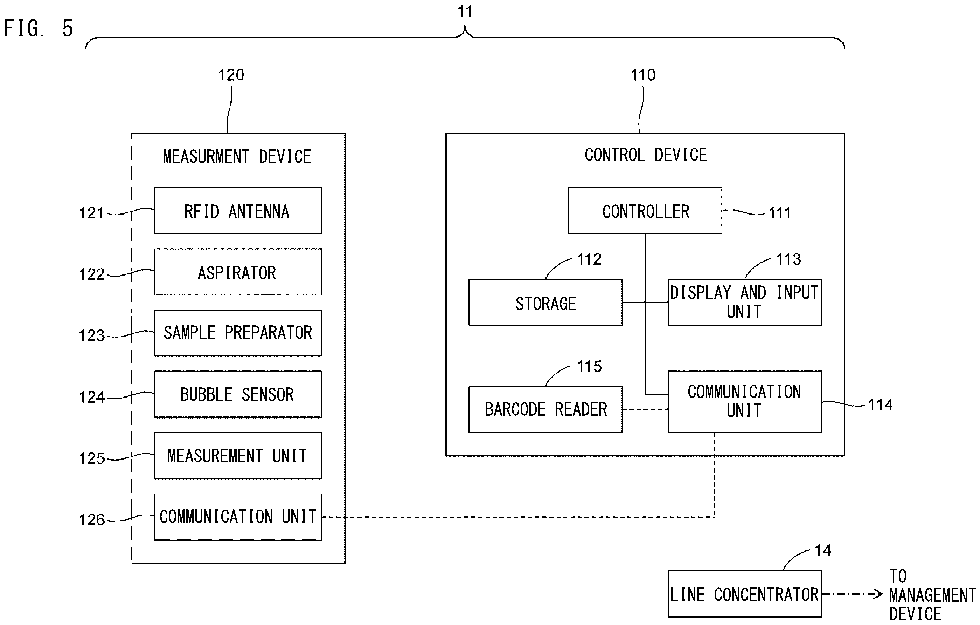

FIG. 5 is a block diagram illustrating a functional configuration of the blood cell counter 11. Although only one measurement device 120 is shown in FIG. 5 for convenience, the two measurement devices 120 have a similar configuration to each other and are similarly connected to the control device 110.

The control device 110 includes a controller 111, a storage 112, a display and input unit 113, a communication unit 114, and a barcode reader 115. The controller 111, the storage 112, and the communication unit 114 are housed in the main body 110a (see FIG. 2).

The controller 111 includes, for example, a CPU. The controller 111 executes a computer program stored in the storage 112 to execute various kinds of processing. The controller 111 controls the two measurement devices 120. The storage 112 includes, for example, an SSD or an HDD. The display and input unit 113 includes, for example, a touch panel type display. The display and input unit 113 may be divided into a display such as a liquid crystal display or an organic EL display and an input unit such as a mouse or a keyboard.

The communication unit 114 includes a connection terminal based on the Ethernet standard and a connection terminal based on the USB standard. The communication unit 114 and a line concentrator 14 are connected by a cable based on the Ethernet standard. The line concentrator 14 is, for example, a network hub. The line concentrator 14 is connected to the management device 2 via a communication network such as a LAN. The communication unit 114 and the barcode reader 115 are connected by a cable based on the USB standard. The communication unit 114 and the communication unit 126 of the two measurement devices 120 are connected by a cable based on the USB standard.

The measurement device 120 includes an RFID antenna 121, an aspirator 122, a sample preparator 123, a bubble sensor 124, a measurement unit 125, and a communication unit 126.

The RFID antenna 121 reads the reagent information from the RFID tags T1 of the reagent containers 201 to 205 set in the measurement device 120. In the embodiment, the reagent information is read by the RFID antenna 121 when the reagent containers 201 to 205 are set in the measurement device 120. Using the read reagent information, it is determined whether or not the reagent containers have been set to appropriate positions.

The aspirator 122 includes a sample aspiration nozzle, a plurality of reagent aspiration nozzles, and a plurality of tubes. The aspirator 122 aspirates the sample from the sample container 101 (see FIG. 2) via the sample aspiration nozzle. The aspirator 122 aspirates the reagents from the reagent containers 201 to 205 via the plurality of reagent aspiration nozzles. The aspirator 122 aspirates the reagents from the reagent containers 211 to 216 via the plurality of tubes. The sample preparator 123 includes a plurality of chambers for mixing the sample and the reagent. In each chamber, the sample and the reagent are mixed and a measurement sample is prepared. The bubble sensors 124 are provided in the respective tubes connecting the reagent containers 211 to 216 and the measurement device 120. The bubble sensor 124 is a prism sensor that detects bubbles contained in the tube.

A measurement unit 125 measures blood cells in the measurement sample by a sheath flow DC detection method, a SLS-hemoglobin method, and a flow cytometry method based on the measurement sample prepared by the sample preparator 123. The communication unit 126 includes a connection terminal based on the USB standard. The reagent information acquired by the RFID antenna 121, a detection signal of the bubble sensor 124, and measurement data acquired by the measurement unit 125 are transmitted to the control device 110 via the communication unit 126. The controller 111 of the control device 110 performs various processes based on the reagent information and the detection signal. The controller 111 analyzes the sample based on the measurement data and generates an analysis result.

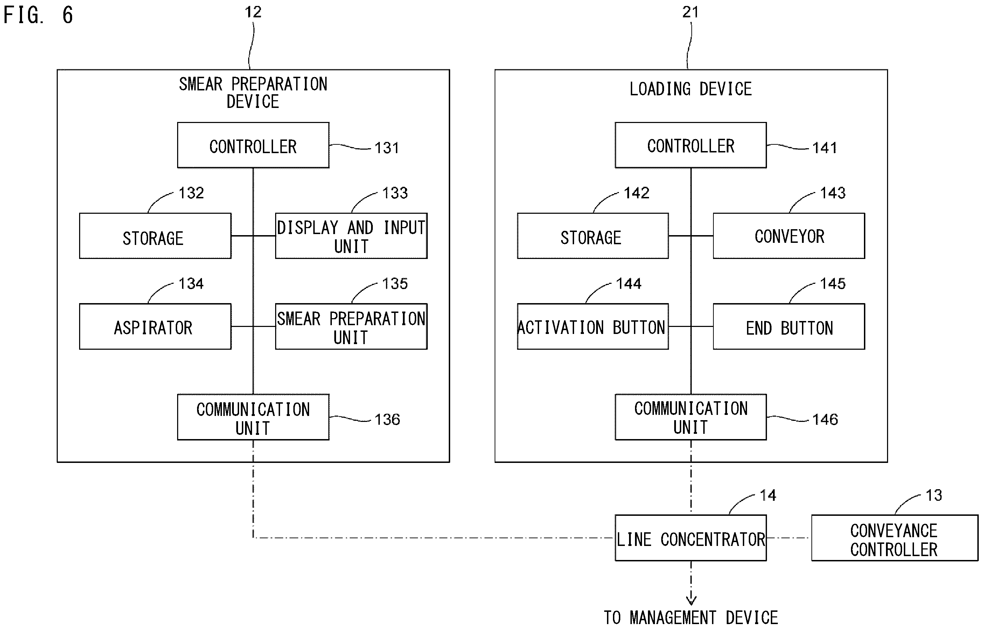

FIG. 6 is a block diagram illustrating a functional configuration of the smear preparator 12 and the loading device 21.

The smear preparator 12 includes a controller 131, a storage 132, a display and input unit 133, an aspirator 134, a smear preparation unit 135, and a communication unit 136.

The controller 131 includes, for example, a CPU. The controller 131 executes a computer program stored in the storage 132 to execute various kinds of processing. The storage 132 includes, for example, an SSD or an HDD. The display and input unit 133 includes, for example, a touch panel type display.

The aspirator 134 aspirates the sample from the sample container 101 (see FIG. 2). The aspirator 134 aspirates the reagent from the reagent container connected to the smear preparator 12. The smear preparation unit 135 prepares a smear on a slide glass based on the sample aspirated by the aspirator 134. The communication unit 136 includes, for example, a connection terminal based on the Ethernet standard. The communication unit 136 and the line concentrator 14 are connected by a cable based on the Ethernet standard.

The loading device 21 includes a controller 141, a storage 142, a conveyer 143, an activation button 144, an end button 145, and a communication unit 146.

The controller 141 includes, for example, a CPU. The controller 141 executes a computer program stored in the storage 142 to execute various kinds of processing. The storage 142 includes, for example, an SSD or an HDD. The conveyer 143 carries out the sample rack 100 set in the loading device 21 by the user to the preprocessing device 22 (see FIG. 2). The conveyer 143 conveys the sample rack 100 carried in from the preprocessing device 22 to the collection device 25 (see FIG. 2).

The activation button 144 and the end button 145 are provided at a front end of the loading device 21. When the user presses the activation button 144, the controller 141 transmits an activation instruction for activating each device of the blood cell analyzer 3 to the conveyance controller 13. The conveyance controller 13 transmits the activation instruction to each device of the blood cell analyzer 3. The activation instruction is, for example, a packet based on Wake-on-LAN. As a result, each device of the blood cell analyzer 3 is activated. Further, when the user presses the end button 145, the controller 141 transmits an end instruction for shutting down each device of the blood cell analyzer 3 to the conveyance controller 13. The conveyance controller 13 transmits the end instruction to each device of the blood cell analyzer 3. As a result, each device of the blood cell analyzer 3 is shut down.

The communication unit 146 includes, for example, a connection terminal based on the Ethernet standard. The communication unit 146 and the line concentrator 14 are connected by a cable based on the Ethernet standard.

The preprocessing device 22, the conveyers 23 and 24, and the collection device 25 are configured in the same manner as the loading device 21 except for the activation button 144 and the end button 145. The conveyance controller 13 is configured similarly to the control device 110 (see FIG. 5) except for the barcode reader 115. The preprocessing device 22, the conveyers 23 and 24, the collection device 25, and the conveyance controller 13 are connected to the line concentrator 14 by cables based on the Ethernet standard.

Next, configurations of the reagent usage amount database 311, the operation log 312, the reagent database 313, and the reagent usage pattern information 314 will be described.

As described above, the reagent usage amount database 311 includes a reagent usage amount database for each processing module. The operation log 312 includes an operation log for each processing module. The reagent database 313 includes a reagent database for each processing module. The reagent usage pattern information 314 includes reagent usage pattern information for each processing module. The reagent usage amount database for each processing module includes first through fourth reagent usage amount databases as described below.

Hereinafter, only the first to fourth reagent usage amount databases, the operation logs, the reagent databases, and the reagent usage pattern information regarding the measurement device 120 will be described. With respect to the other processing modules (the smear preparator 12 and the measurement device 4b and 5b), the first to fourth reagent usage amount databases, the operation logs, the reagent databases, and the reagent usage pattern information are configured in the same manner as those of the measurement device 120, and therefore, description of the other processing modules will be omitted for convenience.

FIG. 7 is a diagram schematically illustrating a configuration of the first reagent usage amount database. The first reagent usage amount database is a database regarding amounts of reagents used during sample measurement of the measurement device 120. Since the two measurement devices 120 have the same configuration, the first reagent usage amount database is commonly used for the two measurement devices 120.

The first reagent amount database may store an amount of a reagent to be used for each discrete mode (measurement item) in association with a reagent name. For example, when a measurement based on discrete mode CBC is performed, 29.1 mL of dilution solution A, 0.5 mL of hemolytic agent A, 1.5 mL of hemolytic agent B, and 20 µL of stain solution A are used. The controller 301 of the management device 2 acquires, based on the first reagent usage amount database, which and how much reagent is used for the measurement by the measurement device 120.

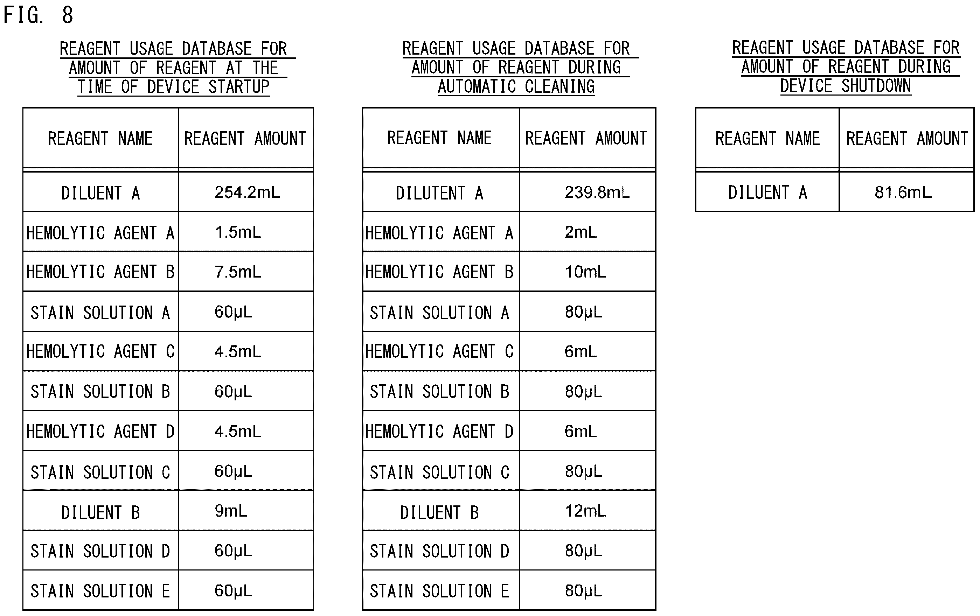

FIG. 8 is a diagram schematically illustrating configurations of the second reagent usage amount database, the third reagent usage amount database, and the fourth reagent usage amount database. The second reagent usage amount database is a database regarding amounts of reagents used when the measurement device 120 is started. The third reagent usage amount database is a database regarding amounts of reagents used during an automatic cleaning of the measuring device 120. The fourth reagent usage amount database is a database regarding amounts of reagents used when the measurement device 120 is shut down. The second to fourth reagent usage amount databases are also commonly used for the two measurement devices 120.

As shown on the left side of FIG. 8, the second reagent usage amount database may store an amount of a reagent used for a start of the measurement device 120 in association with a reagent name. When the measurement device 120 is started, the reagents are aspirated from the respective reagent containers in order to wash the aspirator 122, the sample preparator 123, and the measurement unit 125. The controller 301 of the management device 2 acquires, based on the second reagent usage amount database, which and how much reagent is used for the start of the measurement device 120.

As shown in the center of FIG. 8, the third reagent usage amount database may store an amount of a reagent used for an automatic washing of the measurement device 120 in association with a reagent name. When an instruction for the automatic cleaning is input by the user, the reagents are aspirated from the respective reagent containers in order to clean the aspirator 122, the sample preparator 123, and the measurement unit 125. The controller 301 of the management device 2 acquires, based on the third reagent usage amount database, which and how much reagent is used for the automatic cleaning of the measurement device 120.

As shown on the right side of FIG. 8, the fourth reagent usage amount database may store an amount of a reagent used for a shutdown of the measurement device 120 in association with a reagent name. Immediately before the shutdown is performed by the measurement device 120, the aspirator 122, the sample preparator 123, and the measurement unit 125 are washed, and the diluent A is aspirated from the reagent container 201 in order to fill a tube connecting the reagent container 201 containing the diluent A and the measurement device 120 with the diluent A. The controller 301 of the management device 2 acquires, based on the fourth reagent usage amount database, which and how much reagent is used for the shutdown of the measurement device 120.

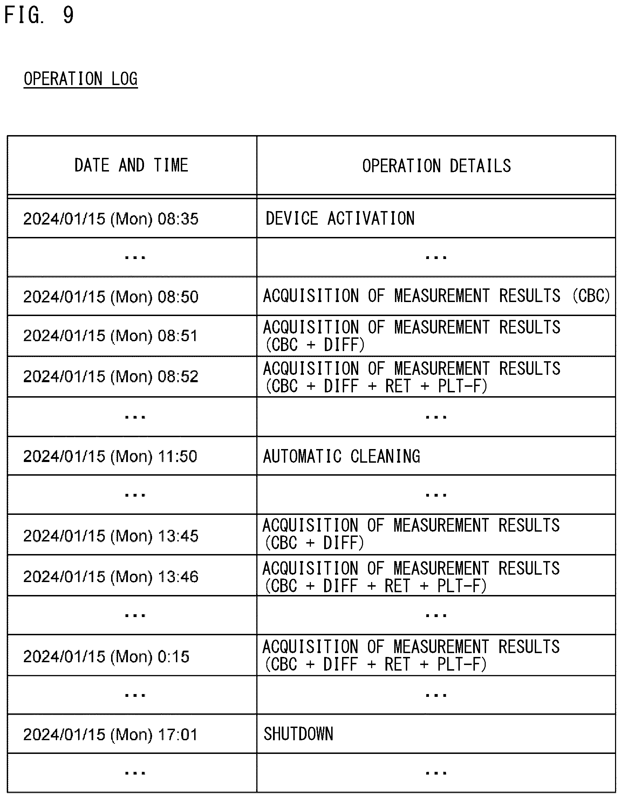

FIG. 9 is a diagram schematically illustrating a configuration of the operation log of the measurement device 120. The operation log of the measurement device 120 as illustrated in FIG. 9 is stored for each measurement device 120.

The operation log may store an operation content performed at the timing in association with its date and time. Each time the measurement device 120 performs a predetermined operation, the controller 111 of the control device 110 transmits the operation contents of the measurement device 120 to the management device 2. The controller 301 of the management device 2 stores the operation log based on the received operation contents.

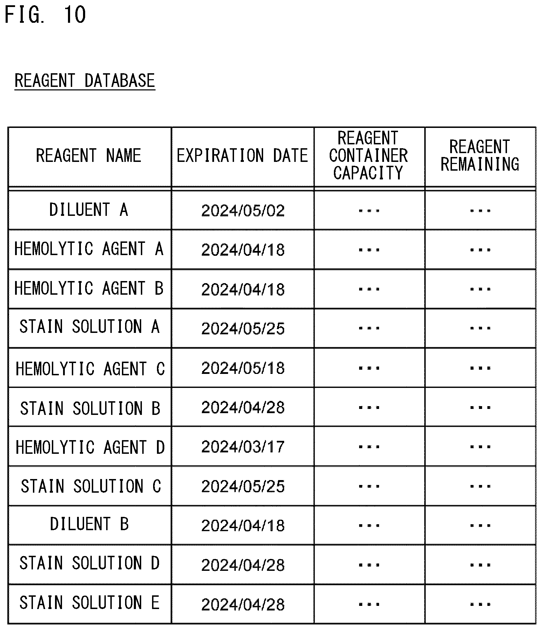

FIG. 10 is a diagram schematically illustrating a configuration of the reagent database related to reagents installed in the measurement device 120. A reagent database as shown in FIG. 10 is stored for each measurement device 120.

The reagent database may store an expiration date of a reagent, a capacity of a reagent container, a remaining amount of the reagent remaining in the reagent container, and the like in association with a reagent name. In addition to the above information, the reagent database may also store a lot number and a serial number.

When a new reagent container is set in the measurement device 120, the controller 111 of the control device 110 transmits the reagent information read from the barcode labels B1 and B2 to the management device 2. The controller 301 of the management device 2 updates the reagent database based on the received reagent information. As a result, the type of the reagent, the expiration date, and the capacity of the reagent container included in the reagent information are stored in records of the corresponding reagent in the reagent database. The reagent remaining amount is stored with the same value as the capacity of the reagent container as an initial value. In addition, when updating the operation log based on the operation content received from the control device 110, the controller 301 of the management device 2 acquires a usage amount of the reagent based on the first to fourth reagent usage amount databases and reduces the usage amount from the remaining reagent amount in the reagent database.

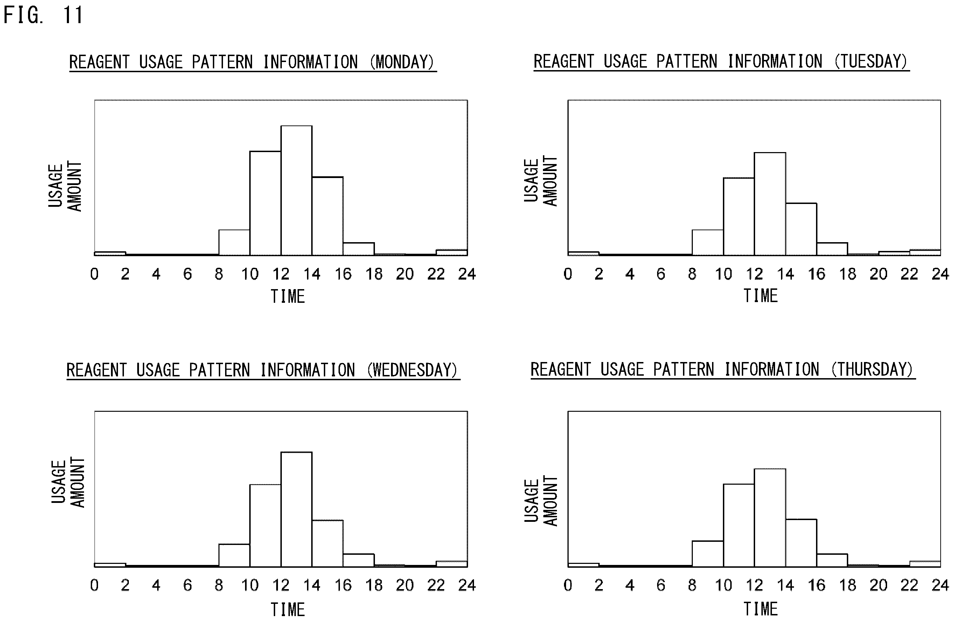

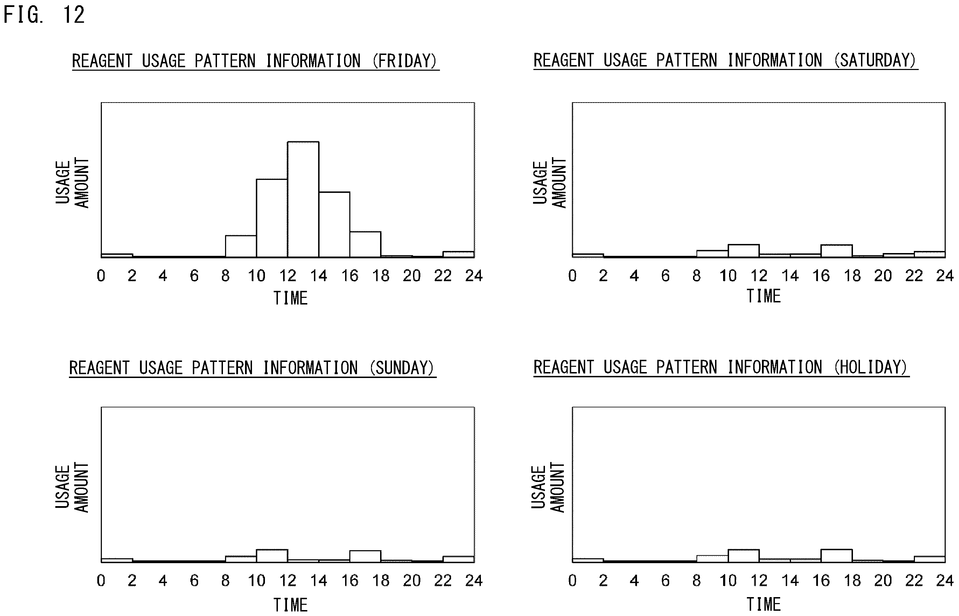

FIGS. 11 and 12 are diagrams schematically illustrating a configuration of reagent usage pattern information of the measurement device 120.

As illustrated in FIGS. 11 and 12, reagent usage pattern information of Monday, Tuesday, Wednesday, Thursday, Friday, Saturday, Sunday, and holidays is stored for each of the measurement device 120 and the reagent type. Each of the reagent usage pattern information includes data having a time at a predetermined time interval (for example, 2 hours) as a horizontal axis and a usage amount as a vertical axis. In the examples shown in FIGS. 11 and 12, in a facility in which the sample analysis system 1 is operated, the usage amount of the reagent is large in Monday to Friday on the business day and 8:00 to 18:00 in the business hour, and the usage amount of the reagent is small in the non-business day and the non-business hour.

The business day in a hospital is, for example, a day on which an outpatient is accepted, and the non-business day is a day on which only an emergency patient is accepted without accepting an outpatient. Similarly, the operating time period in the hospital is, for example, a time period in which an outpatient is accepted and additional time periods before and after the time period. The non-operating time period is a time period in which an outpatient is not accepted and only an emergency patient is accepted.

The controller 301 of the management device 2 generates the reagent usage pattern information as illustrated in FIGS. 11 and 12 based on the operation logs. The controller 301 calculates a predicted replacement timing indicating when a reagent shortage occurs in the reagent container based on the reagent usage pattern information. When the user inputs an instruction to display the predicted replacement timing, the controller 301 of the management device 2 displays the predicted replacement timing of a target reagent on the display 302.

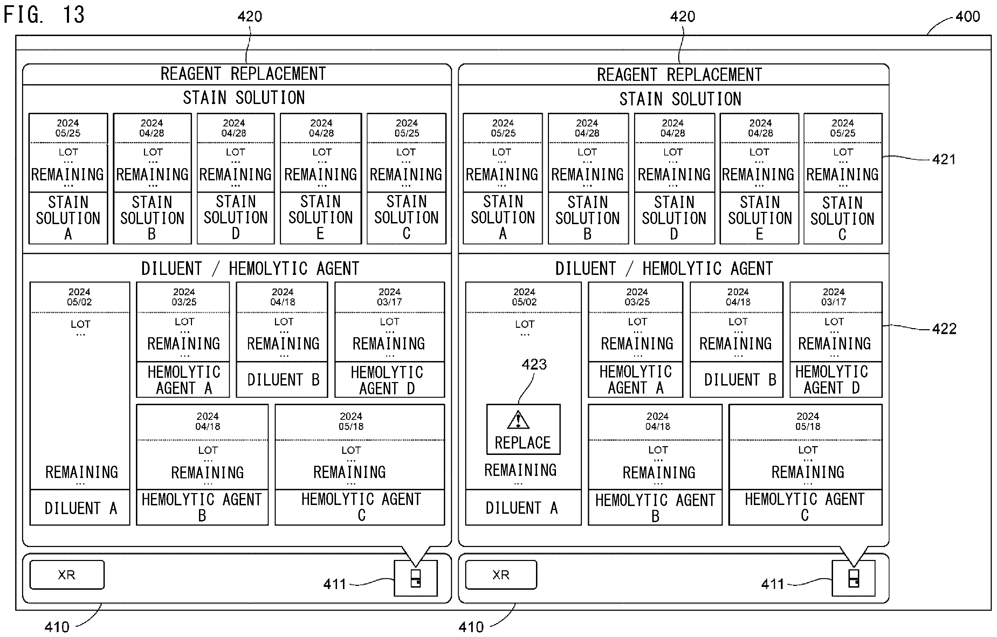

FIG. 13 is a diagram schematically illustrating a configuration of a reagent management screen 400 displayed on the display and input unit 113 of the control device 110.

The controller 111 of the control device 110 displays the reagent management screen 400 on the display and input unit 113 in response to a user instruction input via the display and input unit 113, and performs various processes based on the reagent management screen 400.

The reagent management screen 400 includes two device information areas 410 and two reagent windows 420 that are respectively displayed in correspondence with the two device information areas 410.

The two device information areas 410 are arranged adjacent to each other on the reagent management screen 400. Each of the two device information areas 410 corresponds to two actually arranged measurement devices 120. The device information area 410 includes a button 411 for turning on and off display of the reagent window 420.

When the user operates the button 411, the reagent window 420 indicating the reagents set in the measurement device 120 is displayed on the upper side of the corresponding device information area 410. The reagent window 420 includes five reagent information areas 421 and six reagent information areas 422. The five reagent information areas 421 correspond to the staining solutions of the five reagent containers 201 to 205 accommodated in the measurement device 120, respectively. The six reagent information areas 422 correspond to the diluent and the hemolytic agent of the six reagent containers 211 to 216 accommodated in the storage unit 33. The reagent information area 421,422 displays the reagent name, the expiration date, the lot number, and a remaining usage count of the corresponding reagent.

In the reagent information area 421,422, an icon 423 indicating that a replacement of the corresponding reagent container is necessary is displayed when the reagent is in shortage. When the icon 423 is displayed, the user removes the corresponding reagent container and sets a new reagent container, and the barcode reader 115 reads the barcode label B1 or the barcode label B2 from the new reagent container. Thus, the record of the reagent in the corresponding reagent database (see FIG. 10) is updated based on the reagent information of the new reagent container.

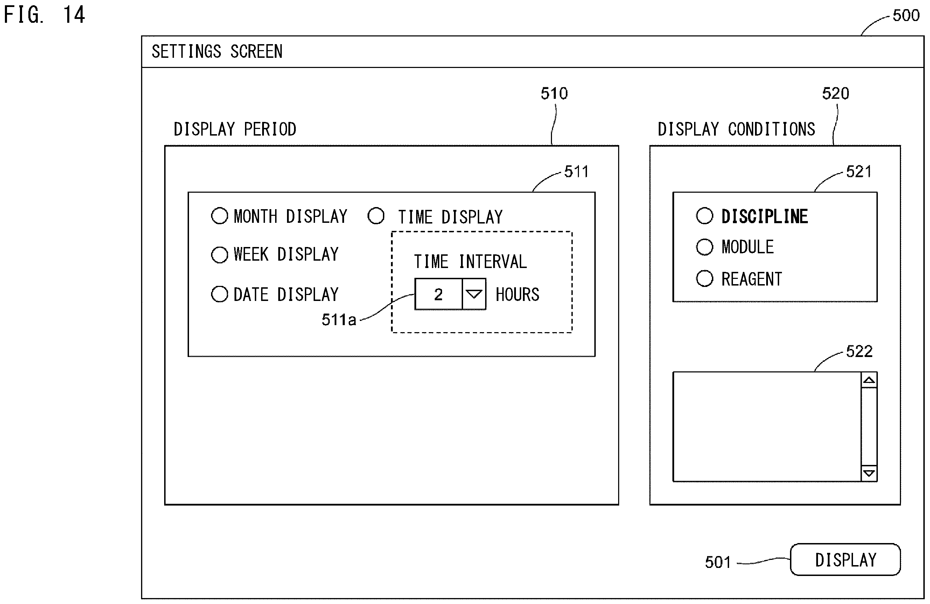

Next, with reference to FIGS. 14 to 21, a screen for displaying a predicted replacement timing indicating when a reagent shortage occurs in the reagent container will be described.

The controller 301 of the management device 2 displays the screens illustrated in FIGS. 14 to 21 on the display 302 in response to the user's instruction input via the input unit 303, and performs various kinds of processing based on these screens.

FIG. 14 is a diagram schematically illustrating a configuration of a setting screen 500.

The setting screen 500 includes a display period setting area 510, a display condition setting area 520, and a display button 501.

The display period setting area 510 is an area for setting a time width for displaying the predicted replacement timing. The display period setting area 510 includes an area 511 including a radio button. The radio button is a button for selecting one of a month display, a week display, a day display, and a time display. When the radio button of the time display is selected in the area 511, a pull-down menu 511a for setting a time interval is enabled. The pull-down menu 511a is configured to be capable of selecting values such as 2, 4, 6, 8, 12, 24, 48, and 72. Note that the user can directly input a desired time interval (numerical value) into the pull-down menu 511a. The controller 301 of the management device 2 receives an input specifying a desired period among multiple periods of different lengths of time including (i) a period longer than a day and (ii) a period of a day or shorter, via the display period setting area 510 in the setting screen 500.

The display condition setting area 520 is an area for selecting a type of the reagent for displaying the predicted replacement timing. The display condition setting area 520 includes an area 521 including a radio button for selecting one of a discipline, a module, and a reagent, and an area 522 in which a check box corresponding to the reagent narrowed down by a selection in the area 521 is displayed.

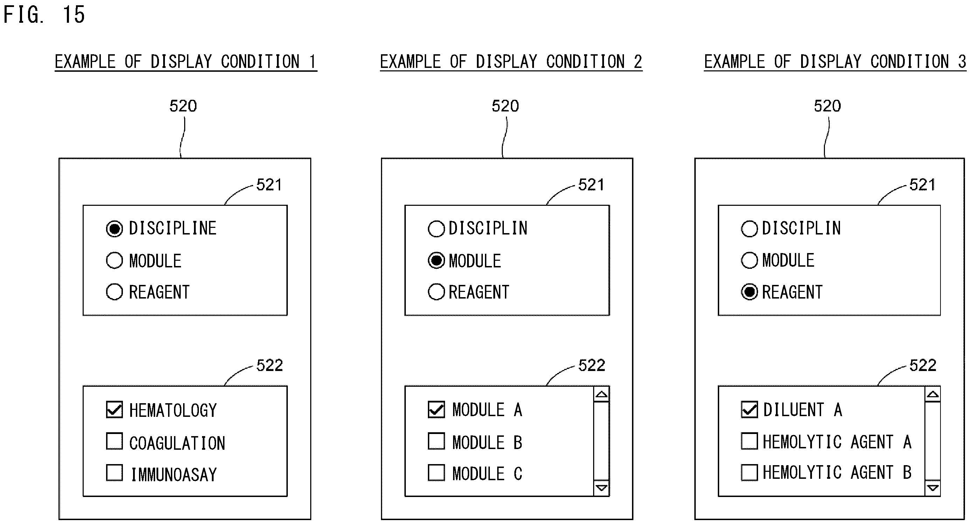

FIG. 15 is a diagram illustrating an example of a display condition set in the display condition setting area 520.

In the example 1 illustrated on the left side of FIG. 15, "discipline" is selected in the area 521. As a result, "hematology", "coagulation" and "immunoassay" are displayed in the area 522. When a checkbox corresponding to the hematology is selected, all the reagents set in the blood cell analyzer 3 become targets for displaying the predicted replacement timing. When a check box corresponding to the coagulation is selected, all the reagents set in the blood coagulation analyzer 4 become targets for displaying the predicted replacement timing. When a check box corresponding to the immunoassay is selected, all the reagents set in the immunoassay analyzer 5 become targets for displaying the predicted replacement timing.

In the example 2 illustrated in the center of FIG. 15, "module" is selected in the area 521. As a result, all the processing modules (the measurement device 120 on the right side, the measurement device 120 on the left side, the smear preparator 12, the measurement device 4b, and the measurement device 5b) included in the sample analysis system 1 are displayed in the area 522. In the example 2 of FIG. 15, the modules A, B, C, . . . correspond to the respective processing modules. When a check box corresponding to the processing module is selected, all the reagents corresponding to the selected processing module become targets for displaying the predicted replacement timing.

In the example 3 illustrated on the right side of FIG. 15, "reagent" is selected in the area 521. As a result, all the reagents set in the sample analysis system 1 are displayed in the area 522. When a check box corresponding to the reagent is selected in the area 522, the selected reagent becomes a target for displaying the predicted replacement timing.

The check boxes displayed in the area 522 are not limited to single selection, and a plurality of selections are also possible. For example, when the check boxes of all the fields are selected in the area 522 on the left side of FIG. 15, all the reagents set in the sample analyzers of all the fields become targets for displaying the predicted replacement timing. In the central area 522 of FIG. 15, when the check boxes of all the processing modules are selected, all the reagents set in all the processing modules become targets for displaying the predicted replacement timing. When the check boxes of all the reagents are selected in the area 522 on the right side of FIG. 15, all the reagents become targets for displaying the predicted replacement timing.

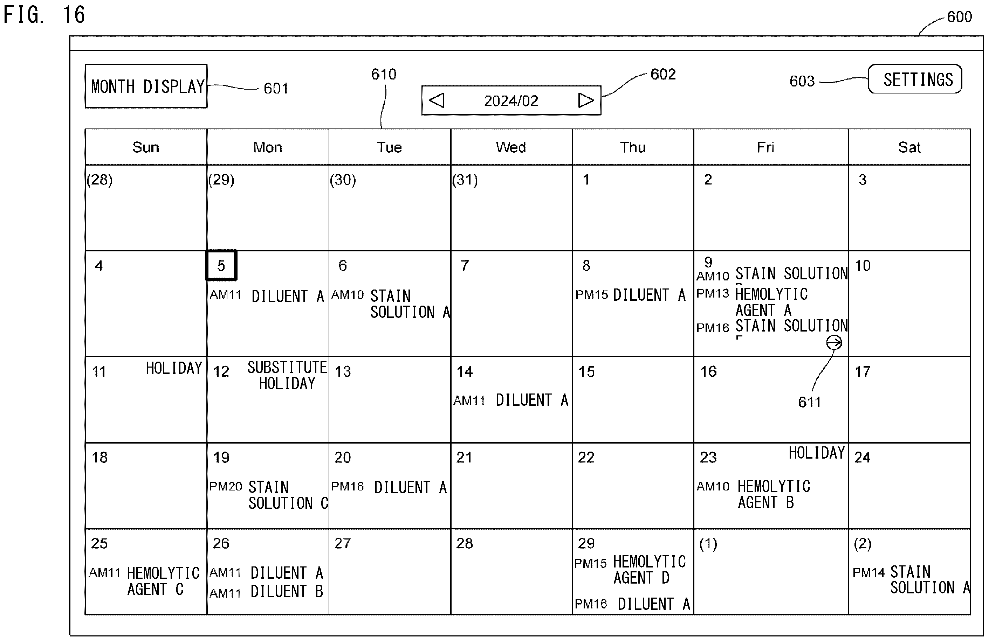

Returning to FIG. 14, the user selects the display period and the reagents to be displayed in the display period setting region 510 and the display condition setting area 520, and then operates the display button 501. Thus, the controller 301 of the management device 2 displays a predicted replacement timing screen 600 illustrated in FIGS. 16 to 21 on the display 302 based on contents set on the setting screen 500.

FIG. 16 is a diagram schematically illustrating a configuration of the predicted replacement timing screen 600 in a case where the month display is selected on the setting screen 500.

The predicted replacement timing screen 600 includes a period unit display area 601, a period setting area 602, a setting button 603, and a calendar area 610.

In the example illustrated in FIG. 16, since the month display is selected on the setting screen 500, "month display" is displayed in the period unit display area 601. In addition, since the current date is February 5, 2024, "2024/02" is displayed as calendar year and month of the display target in the period setting area 602.

In the calendar area 610, a February 2024 calendar including the current date is displayed. The number "5" corresponding to the current date is enclosed by a bold line to indicate the current date. In a frame of each date in the calendar area 610, time when a reagent shortage occurs (predicted replacement timing) and a name of the reagent are displayed. "AM" indicates the morning and "PM" indicates the afternoon. The numbers indicate the times in the 24-hour system.

When four or more predicted replacement times are included in a day, an icon 611 is displayed within the frame of the date. For example, since 5 predicted replacement timings are included on February 9, three predicted replacement timings are displayed in the earlier order within the frame of February 9, and an icon 611 is displayed instead of the other predicted replacement timings. When the icon 611 is operated, for example, all predicted replacement timings of the date are displayed in a pop-up menu.

Further, the period setting area 602 includes a left arrow button and a right arrow button for moving the month to be displayed in the calendar area 610 one month at a time before and after (past and future). In the example illustrated in FIG. 16, when the left arrow button is operated, a calendar for January 2024 is displayed in the calendar area 610. When the right arrow button is operated, the calendar for March 2024 is displayed in the calendar area 610. The user can display a calendar of a desired month by repeatedly operating the left arrow button and the right arrow button.

Further, in the example shown in FIG. 16, since the current date is February 5, 2024, the display of the predicted replacement timing and the reagent name before February 4, 2024 (including February 4) is omitted. Note that the predicted replacement timing and the reagent name in the past may also be displayed in the calendar area 610. In this case, it is preferable that the characters indicating the predicted replacement timing and the reagent name in the past are displayed in a different manner from those in other periods, such as a light color or a small size.

When the setting button 603 is operated, the controller 301 of the management device 2 closes the predicted replacement timing screen 600 and again displays the setting screen 500 on the display 302. The user can re-input the setting of the reagent to be displayed by operating the setting button 603.

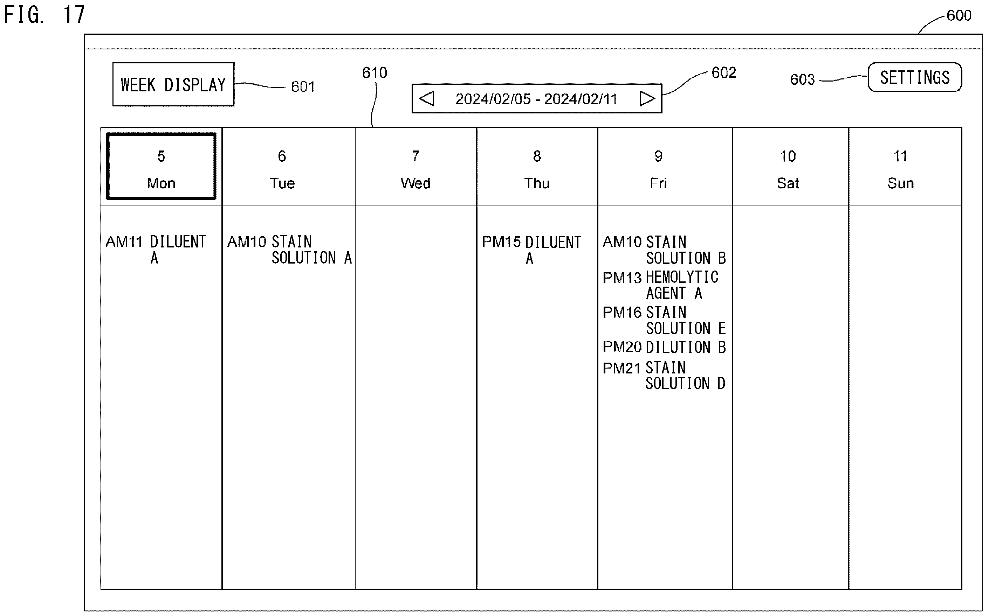

FIG. 17 is a diagram schematically illustrating a configuration of the predicted replacement timing screen 600 in a case where the week display is selected on the setting screen 500.

In the example illustrated in FIG. 17, since the week display is selected on the setting screen 500, "week display" is displayed in the period unit display area 601. In addition, since the current date is February 5, 2024, "2024/02/05-2024/02/11" is displayed as a week to be displayed in the period setting area 602.

In the calendar area 610, a one-week calendar including the current date is displayed. "5 Mon" corresponding to the current date is enclosed by a bold line to indicate the current date. In a frame below each date of the calendar area 610, time when a reagent shortage occurs (predicted replacement timing) and a name of the reagent are displayed on the date. In FIG. 17, unlike in FIG. 16, all predicted replacement timings and reagent names are displayed on February 9.

In this case as well, by operating the left arrow button and the right arrow button of the period setting area 602, the user can move the week to be displayed in the calendar area 610 one week at a time before and after (the past and the future) and display the calendar of the desired week.

Note that, in the calendar area 610 in the case of the week display, a week including the current date may be displayed so as to start from Sunday and end on Saturday as in the case of the month display.

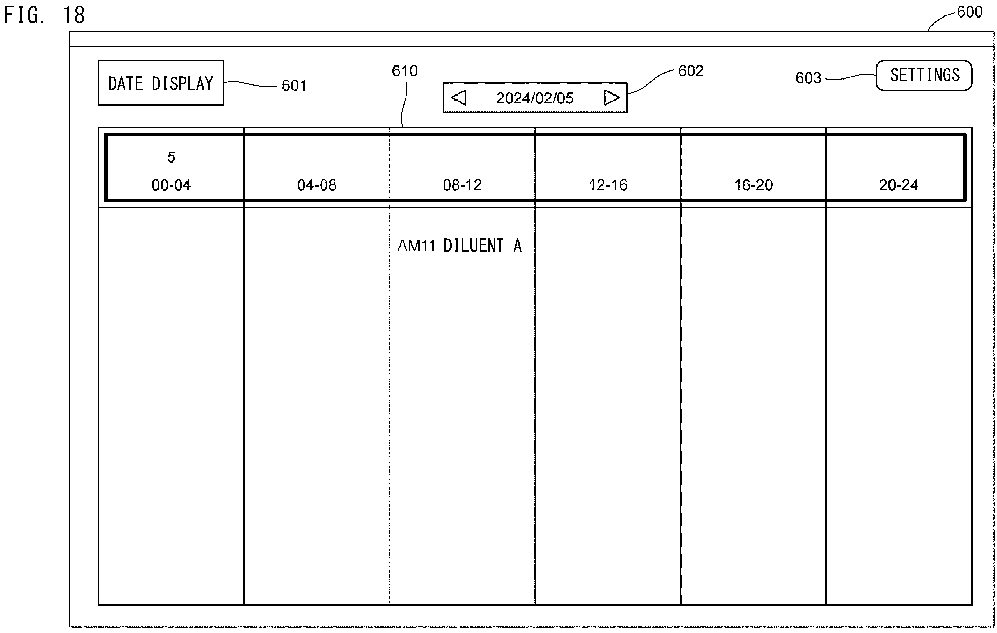

FIG. 18 is a diagram schematically illustrating a configuration of the predicted replacement timing screen 600 when the day display is selected in the setting screen 500.

In the example illustrated in FIG. 18, since the day display is selected on the setting screen 500, "day display" is displayed in the period unit display area 601. In addition, since the current date is February 5, 2024, "2024/02/05" is displayed as the display target date in the period setting area 602.

In the calendar area 610, the current date is displayed separated by four hours. The 24-hour range of the current date is enclosed by a bold line to indicate the current date. In the lower frame of the calendar area 610, time (predicted replacement timing) when a reagent shortage occurs and a name of the reagent are displayed in the corresponding time zone.

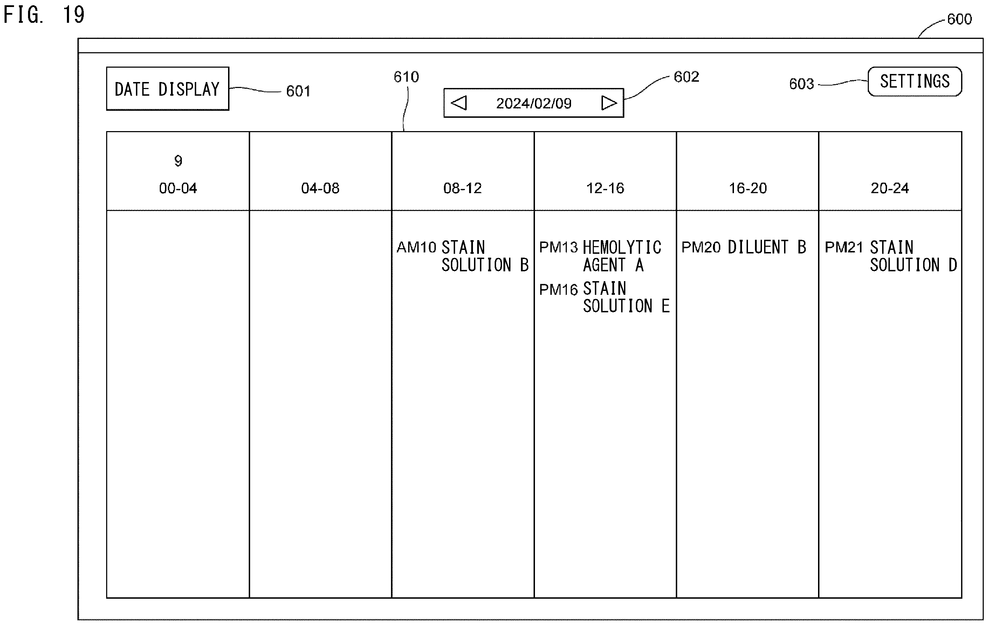

In this case as well, by operating the left arrow button and the right arrow button in the period setting area 602, the user can move the day to be displayed in the calendar area 610 one day at a time before and after (the past and the future) to display the calendar of the desired day. FIG. 19 shows a state in which the period setting area 602 is operated from the state of FIG. 18 and the display target is February 9, 2024. In this case, since a date other than the current date is displayed, the 24-hour range of the date in the calendar area 610 is not surrounded by the bold line. As described above, by operating the period setting area 602, it is possible to display the predicted replacement timing of the desired day.

Note that an initial state of the calendar area 610 in the case of the day display is started from the time zone including 0 o'clock as shown in FIG. 18, but the present invention is not limited thereto and may be started from the time zone including the current time.

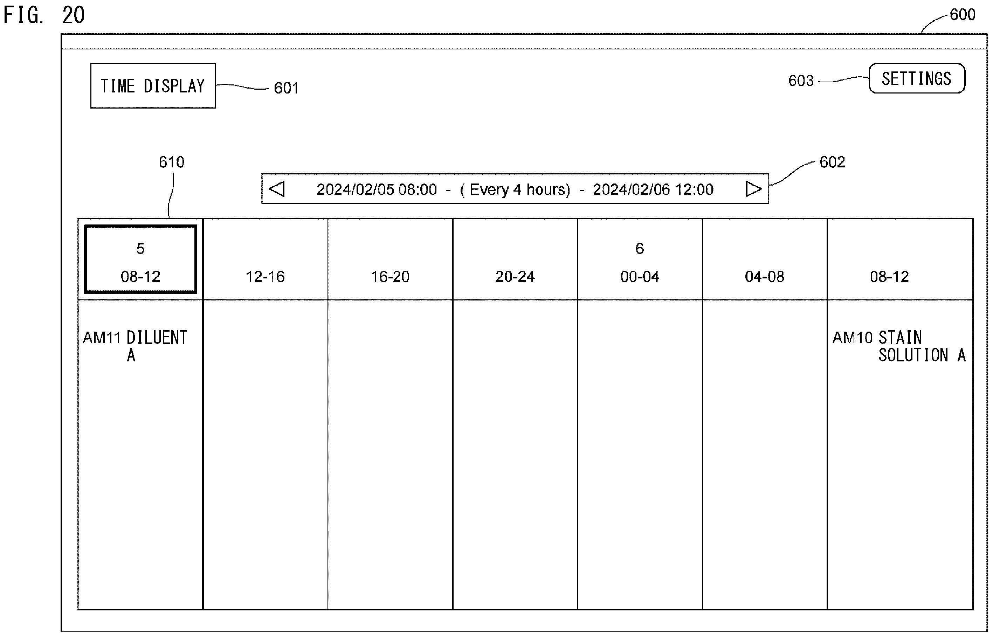

FIG. 20 is a diagram schematically illustrating a configuration of the predicted replacement timing screen 600 in a case where the time display is selected on the setting screen 500 and four hours are set as the time interval.

In the example illustrated in FIG. 20, since the time display is selected on the setting screen 500, "time display" is displayed in the period unit display area 601. Further, since the current date and time is 8:00 on February 5, 2024, "2024/02/05 8:00-(Every 4 hours)-2024/02/06 12:00" is displayed as the time zone to be displayed in the period setting area 602.

In the calendar area 610, a plurality of time zones of four hours starting from the current date and time are displayed. The time zone including the current date and time is surrounded by a bold line to indicate the current date and time. In the lower frame of the calendar area 610, time (predicted replacement timing) when a reagent shortage occurs and a name of the reagent are displayed.

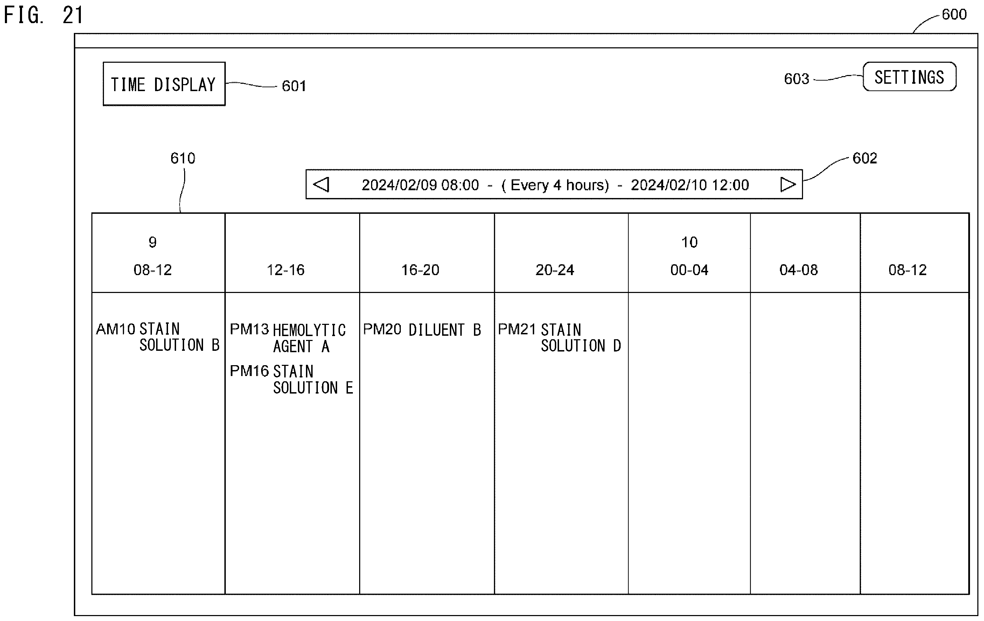

In this case, the user can also operate the left arrow button and the right arrow button of the period setting area 602 to move the time zone to be displayed in the calendar area 610 one time range at a time before and after (the past and the future) to display a calendar of a desired time range. FIG. 21 shows a state in which the period setting area 602 is operated from the state of FIG. 20 and the display target is 8:00 on February 9, 2024. In this case, since the date and time other than the current date and time are displayed, the range of the date and time in the calendar area 610 is not surrounded by the bold line. As described above, by operating the period setting area 602, it is possible to display the predicted replacement timing of the desired date and time.

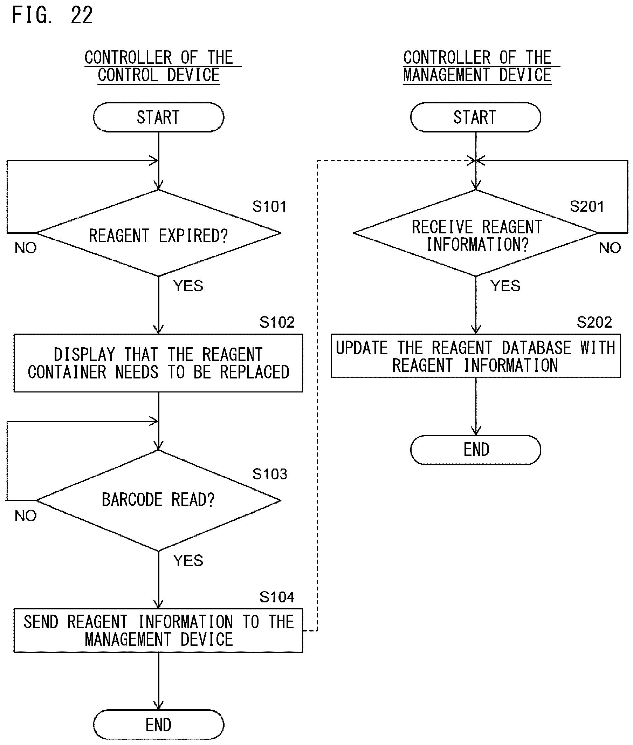

Next, with reference to the flowcharts shown in FIGS. 22 to 25, processes relating to the reagents performed in the sample analysis system 1 will be described.

In the following flowchart, the controller 301 of the management device 2 performs the processes by controller 301 executing the program 315 (see FIG. 4). The controller 111 of the control device 110 performs the processes by executing the computer program stored in the storage 112.

In the following flowchart, as an example, the processes relating to the reagents in the reagent containers 201 to 205, and 211 to 216 installed in the measurement device 120 will be described. Note that since processes relating to the reagents in the other processing modules (the smear preparator 12 and the measurement devices 4b and 5b) are also performed in the same manner as the processes relating to the reagents in the reagent containers installed in the measurement device 120, the description of the processes regarding the reagents in the other processing modules will be omitted for convenience.

FIG. 22 is a flowchart illustrating a reagent container replacement process.

In step S101, the controller 111 of the control device 110 determines whether or not a reagent shortage has occurred in the reagent container containing the reagent by aspiration of the reagent from the reagent container. If the reagent shortage has occurred (step S101: YES), in step S102, the controller 111 displays the icon 423 in the reagent information area 421 or 422 (see FIG. 13) corresponding to the reagent. The icon 423 indicates that a replacement of the reagent container containing the reagent is necessary.

The user confirms the icon 423 and connects a new reagent container to the measurement device 120. The barcode reader 115 reads a barcode of the barcode label B1 or B2 of the new reagent container. When the barcode is read (step S103: YES), in step S104, the controller 111 transmits reagent information obtained from the barcode to the management device 2.

Upon receiving the reagent information from the control device 110 (step S201: YES), the controller 301 of the management device 2 updates the reagent database (see FIG. 10) based on the received reagent information in step S202.

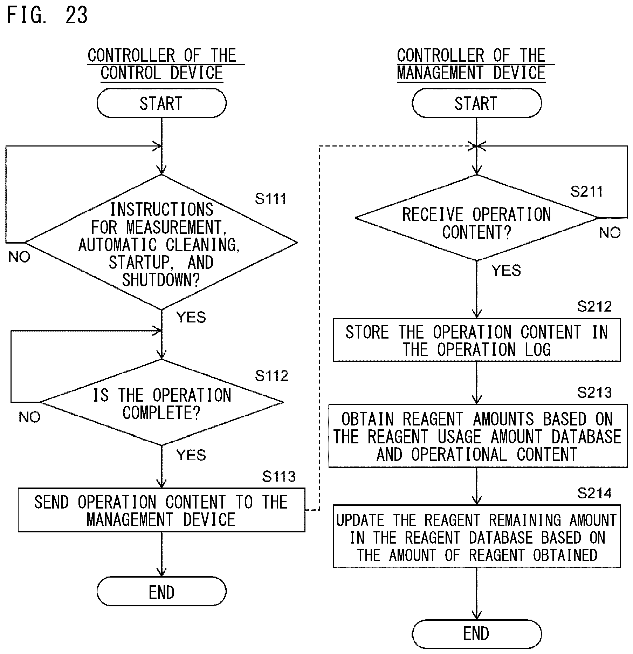

FIG. 23 is a flowchart illustrating a process of updating the remaining amount of the reagent.

In case that the sample container 101 is positioned at the measurement device 120 by the transfer of the sample rack 100, the controller 111 of the control device 110 transmits a measurement instruction to the measurement device 120 so that a sample contained in the sample container 101 is measured. In case that the user inputs an automatic cleaning instruction to the control device 110, the controller 111 transmits an instruction for the automatic cleaning to the measurement device 120 so that the measurement device 120 performs the automatic cleaning. In case that an activation button 144 (see FIG. 6) of the loading device 21 is pressed by the user, the controller 111 transmits an activation instruction to the two measurement devices 120 so that the measurement devices 120 are in a measurable state. In case that an end button 145 (see FIG. 6) of the loading device 21 is pressed by the user, the controller 111 transmits a shutdown instruction to the two measurement devices 120 so that the measurement devices 120 are shut down.

When the controller 111 of the control device 110 transmits the measurement instruction, the automatic cleaning instruction, the activation instruction, or the shutdown instruction as described above (step S111: YES), the controller 111 suspends the process until the operation corresponding to the instruction transmitted by the measurement device 120 is completed in step S112. When the corresponding operation is completed (step S112: YES), in step S113, the controller 111 transmits operation details of the completed operation to the management device 2. For example, when the measurement operation is completed, the operation content indicating a discrete mode (measurement item) is transmitted. When the automatic cleaning operation is completed, the operation content indicating the automatic cleaning is transmitted. When the activation operation is completed, the operation content indicating that the apparatus has been activated is transmitted. When the shutdown operation is completed, the operation content indicating that the apparatus has shut down is transmitted.

Upon receiving the operation details from the control device 110 (step S211: YES), the controller 301 of the management device 2 stores the received operation details in the operation log (see FIG. 9) in step S212. Subsequently, in step S213, the controller 301 acquires an reagent amount of the reagent used in the operation based on the first to fourth reagent usage amount database (see FIGS. 7 and 8) and the operation contents received in step S211. For example, when the operation content includes the CBC as the discrete mode (measurement item), the controller 301 acquires, from the first reagent usage amount database illustrated in FIG. 7, amounts in which the diluent A, the hemolytic agent A, the hemolytic agent B, and the staining solution A are used.

Subsequently, in step S214, the controller 301 subtracts the reagent amount acquired in step S213 from the reagent remaining amount of the corresponding reagent in the reagent database, whereby updates the reagent remaining amount of the corresponding reagent in the reagent database.

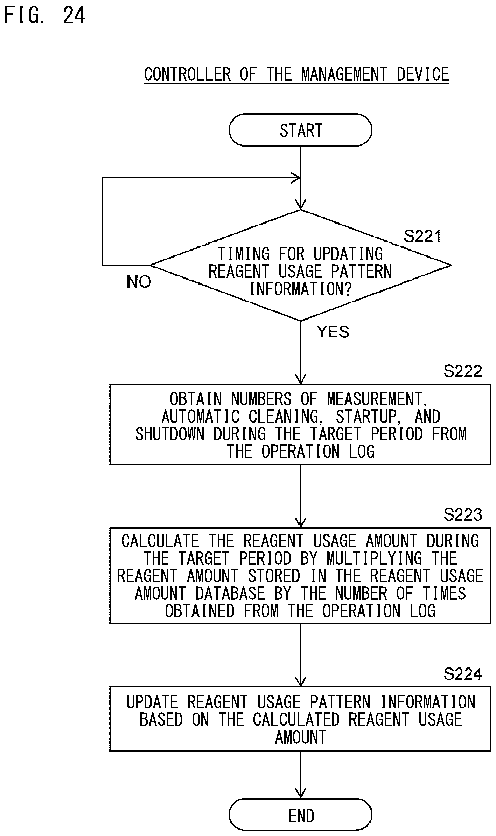

FIG. 24 is a flowchart illustrating a process of updating the reagent usage pattern information by the management device 2.

In step S221, the controller 301 of the management device 2 determines whether or not a update timing of the reagent usage pattern information (see FIGS. 11 and 12) has arrived. The update timing includes, for example, a timing when the start button 144 of the loading device 21 is pressed by the user, a timing when the end button 145 of the loading device 21 is pressed by the user, and a predetermined date and time specified by the user with respect to the management device 2.

When the update timing of the reagent usage pattern information arrives (step S221: YES), the processes of steps S222 to S224 are performed for each of the reagents installed in all the processing modules (the right measurement device 120, the left measurement device 120, the smear preparation preparator 12, and the measurement devices 4b and 5b), whereby the reagent usage pattern information is updated. In the following description, for convenience, the processes for one processing module will be described.

In step S222, the controller 301 acquires, from the operation log of the target processing module, a number of times of measurements, a number of times of automatic cleaning, a number of times of activation, and a number of times of shutdown in a target period (for example, 1 month to half a year). More specifically, the controller 301 divides one day by a predetermined time width (for example, 2 hours) for each type of day (Monday, Tuesday, Wednesday, Thursday, Friday, Saturday, Sunday, or holiday) included in the target period. The controller 301 acquires the number of times of measurements, the number of times of automatic cleaning, the number of times of activation, and the number of times of shutdown in each time width for each type of day included in the target period.

In step S223, the controller 301 multiplies the reagent amount stored in the first to fourth reagent usage amount databases (see, for example, FIGS. 7 and 8) by the number of times acquired in step S222 to calculate the reagent usage amount in the target period. More specifically, the controller 301 calculates, for each type of day (Monday, Tuesday, Wednesday, Thursday, Friday, Saturday, Sunday, or holiday) included in the target period, a total value of the reagent usage amounts in each time width.

In step S224, the controller 301 updates the reagent usage pattern information for each reagent based on the usage amount of the reagent acquired in step S223. More specifically, the controller 301 calculates an average of the reagent usage amounts by dividing the total value of the reagent usage amounts of the respective time width calculated for the respective types of days included in the target period by the number of days of the target period. The controller 301 generates reagent usage pattern information for each reagent as illustrated in FIGS. 11 and 12 based on the calculated average. For example, according to the reagent usage pattern information regarding the measurement device 120 on the right side, it is possible to know, for example, a tendency of how much the diluent A is used in a time width of 8:00 to 10:00 on Monday.

Note that the reagent usage amount for each type of day and each time width calculated in step S224 is not limited to being calculated by an average, and may be, for example, another calculated value such as a median.

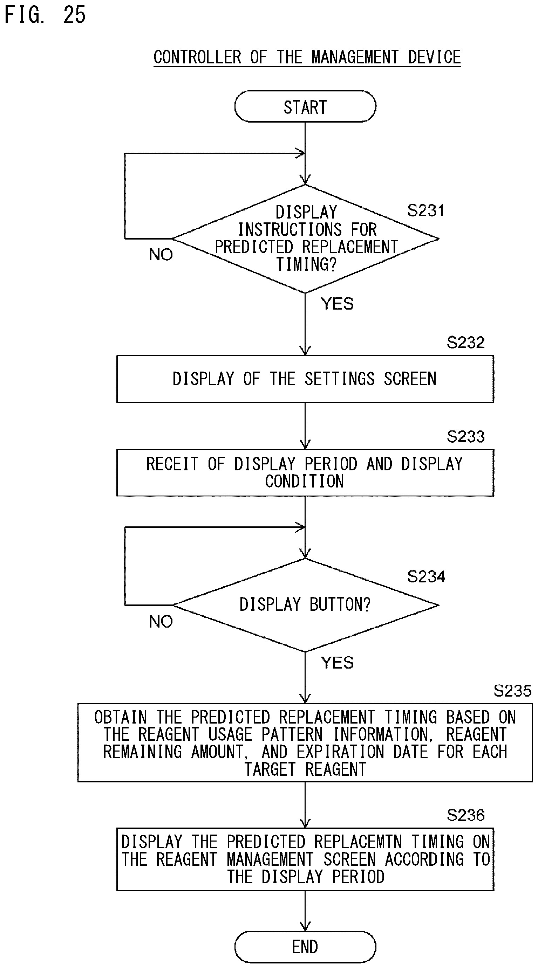

FIG. 25 is a flowchart illustrating a notification process of a predicted replacement timing performed by the management device 2.

In step S231, the controller 301 of the management device 2 determines whether or not a display instruction of the predicted replacement timing has been input by the user. When the instruction to display the predicted replacement timing is input (step S231: YES), in step S232, the controller 301 displays the setting screen 500 (see FIG. 14) on the display 302. In step S233, the controller 301 receives a display period and a display condition via the setting screen 500. In step S234, the controller 301 determines whether the user has operated the display button 501.

When the display button 501 is operated by the user (step S234: YES), in step S235, the controller 301 acquires, for each target reagent designated on the setting screen 500, a predicted replacement timing of the reagent based on the reagent usage pattern information of the reagent and the reagent remaining amount and the expiration date of the reagent stored in the reagent database. Specifically, the controller 301 acquires the predicted replacement timing from the reagent usage pattern information and the reagent remaining amount.

More specifically, the controller 301 acquires, from the reagent usage pattern information, a reagent usage amount of a type and a time width of a day matching the date and time when the display button 501 was operated, and subtracts the reagent usage amount from the reagent remaining amount of the reagent stored in the reagent database. As a result, if the remaining amount of the reagent becomes equal to or less than zero, the predicted replacement timing is defined as a point within the relevant time width. If the remaining amount of the reagent is more than zero, the controller 301 acquires the reagent usage amount of the next time width and further subtracts the reagent usage amount of the next time width from the remaining amount of the reagent. The controller 301 repeats this process until the remaining amount of the reagent becomes equal to or less than zero, and acquires, as the predicted replacement timing, a point within the time width in which the remaining amount of the reagent becomes equal to or less than zero. Note that the point within the time width may be a start time, a central time, an end time, or the like in the time width. The point in the time width may be a time determined according to how much less than zero the result of subtracting the reagent usage amount from the remaining reagent amount. If an obtained date of the predicted replacement timing is later than the expiration date, the controller 301 sets the predicted replacement timing to a predetermined time (e.g., 18 o'clock) on the day of the expiration date.

In step S236, the controller 301 displays the predicted replacement timing screen 600 as illustrated in FIGS. 16, 17, 18, or 20 on the display 302 and displays the predicted replacement timing in the calendar area 610 in accordance with the display period designated on the setting screen 500.

In step S236, the character string of the date and time indicating the predicted replacement timing displayed in the calendar area 610 and the character string indicating the reagent name are information regarding the predicted replacement timing generated based on the predicted replacement timing acquired in step S235. In the embodiment, as described above, the information regarding the predicted replacement timing is a character string, and the information regarding the predicted replacement timing is notified by displaying the character string on the display 302.

Note that the information regarding the predicted replacement timing may be an alarm sound corresponding to the character string, and the information regarding the predicted replacement timing may be notified by outputting the alarm sound from a speaker provided in the management device 2.

### <Effects of a Management Method, a Management Apparatus, a Sample Analysis System, and a Program According to the Embodiment>

In the management method for managing the replacement timing of reagents (consumables) in the blood cell analyzer 3, the blood coagulation analyzer 4, and the immunoassay analyzer 5 (sample analyzer), the operation log (usage record) of the reagents (consumables) is stored (step S212 in FIG. 23), and as shown in FIG. 14, the controller receives an input of a desired period among a plurality of periods including a period longer than a day and a period of a day or shorter (step S233 in FIG. 25), and as shown in FIGS. 16, 17, 18, and 20, provides the user of information regarding the predicted replacement timing of the reagents (consumables) during the desired period based on the operation log (usage record) (step S236 in FIG. 25).

An operator of the sample analyzer wants to know, for example, the timing at which the consumables will be replaced during a relatively short period of time, such as today and tomorrow, in accordance with a relationship between the operator and his/her successor. On the other hand, an administrator who orders the consumables wants to know at which timing the consumables will be replaced during a relatively long period of time, such as a week or a month, in consideration of an inventory status of the consumables in his/her own facility, a lead time from an ordering of the consumables to an arrival of the consumables, and the like. As described above, the period in which the replacement timing of the consumables is desired to be grasped is different for each of the various users. According to the above-described method, it is possible to receive an input of a desired period from each user and inform the user of a timing at which the replacement timing may arrive during the desired period. Therefore, it is possible to flexibly respond to requirements of each user regarding the predicted replacement timing of the consumables.

The management method for managing the replacement timing of the reagents (consumables) further includes, as illustrated in the display period setting region 510 of FIG. 14, presenting a plurality of periods to a user (step S232 of FIG. 25), and, in a step of receiving an input (step S233 of FIG. 25), receives a selection of a desired period from the presented plurality of periods.

According to this method, the user can input the desired period only by selecting the desired period from the presented multiple periods, and thus can improve a convenience of the user.

As illustrated in the display period setting region 510 of FIG. 14, the period longer than a day is a period of a week or longer.

In this case, the period of a week or longer may be entered as the desired period. As a result, the administrator who orders the consumables can know at which timing the consumables will be replaced during a relatively long period of time, such as a week or a month. For example, the administrator can manage the inventory of the consumables while taking into consideration of the lead time from the ordering of the consumables to the arrival of the consumables.

As illustrated in the display period setting region 510 of FIG. 14, the multiple periods include a period of one or multiple months, a period of one or multiple weeks, a period of one or multiple days, and a period of one or multiple hours.

In this case, the user can select a desired period from the multiple periods only by selecting a period desired by the user among the period of one or multiple months, the period of one or multiple weeks, the period of one or multiple days, and the period of one or multiple hours, and thus can improve the convenience of the user.

The desired period is a period including a day when an input of the desired period is received. Specifically, as illustrated in FIGS. 16, 17, 18, and 20, when the predicted replacement timing screen 600 is displayed, the calendar area 610 is displayed so as to include the current point in time.

In this case, the user can know the information regarding the predicted replacement timing from the current point in time onward.

The providing of the information (step S236 in FIG. 25) is executed in response to the receipt of the input of the desired period (steps S233 and S234 in FIG. 25).

According to this method, the user can quickly grasp the information regarding the predicted replacement timing by inputting the desired period.

The management method for managing the replacement timing of the reagent (consumables) further includes obtaining a predicted replacement timing of the reagent (consumables) based on the operation log (usage record) (step S235 in FIG. 25), and the information regarding the predicted replacement timing is generated based on the predicted replacement timing.

According to this method, it is possible to smoothly generate a character string indicating the predicted replacement timing displayed in the calendar area 610, an alarm sound corresponding to the character string, and the like (information regarding the predicted replacement timing).

When the predicted replacement timing is within the desired period, the information regarding the predicted replacement timing includes timing information indicating when a replacement of the reagent (consumables) will be necessary within the desired period. The timing information is, for example, information indicating the date and time displayed in the calendar area 610.

In this case, the user can recognize the timing at which the replacement of the consumables is necessary in more detail.

In the providing step (step S236 in FIG. 25), as shown in the calendar areas 610 of FIGS. 16, 17, 18, and 20, the desired period is displayed in a calendar format, and the timing information is included on the display of the desired period in the calendar format.

According to this method, the user can easily and accurately grasp the timing at which the replacement timing may occur in the calendar according to the period designated by the user.

The acquiring step (step S235 in FIG. 25) includes, based on the operation log (usage record), generating reagent usage pattern information (usage pattern information) indicating the usage pattern of the reagents (consumables) as shown in FIGS. 11 and 12 in a time series, and acquiring a predicted replacement timing based on the reagent usage pattern information (usage pattern information).

According to this method, the usage amount of the consumables in the future can be predicted, and thus the predicted replacement timing can be obtained smoothly.

The consumables are reagents.

In this case, the user can grasp the predicted replacement timing regarding the reagent.

The management method for managing the replacement timing of the reagent (consumables) further includes storing the expiration date of the reagent (consumables) in use (step S202 in FIG. 22), and the information regarding the predicted replacement timing is information based on the operation log 312 (usage record) and the expiration date.

According to this method, even when the replacement timing predicted from the usage record is not included in the desired period of the user, if the expiration date is included in this period, the expiration date is notified as the replacement timing. Therefore, the replacement timing can be notified to the user more accurately.

In a management method in which analysis types (e.g., hematology, coagulation, immunity, etc.) are different from each other, the blood cell analyzer 3, the blood coagulation analyzer 4, and the immunoassay analyzer 5 (a plurality of sample analyzers) are targeted for the management of the reagents (consumables), and the replacement timing of the reagents (consumables) is managed, an input indicating which analysis type is targeted for the notification is further received in the display condition setting area 520 shown on the left side of FIG. 15 (step S233 in FIG. 25), and in the providing step (step S236 in FIG. 25), information regarding the predicted replacement timing is provided for the reagents (consumables) of the sample analyzers corresponding to the inputted analysis types.

According to this method, the user can respectively grasp the replacement timing of the consumables with respect to various sample analyzers installed in his/her own facilities. In addition, the user can grasp the replacement timing of the consumables with respect to the sample analyzers of analysis types in which the user wants to know the replacement timing among the sample analyzers.

As shown in FIG. 1, the blood cell analyzer 3, the blood coagulation analyzer 4, and the immunoassay analyzer 5 (sample analyzer) include two measurement devices 120, a smear preparator 12, and measurement devices 4b and 5b (a plurality of processing modules). The management method for managing the replacement timing of the reagents (consumables) further receives, in the display condition setting area 520 shown in the center of FIG. 15, an input indicating which processing module is to be the target of the notification (step S233 in FIG. 25), and, in the providing step (step S236 in FIG. 25), provides information regarding the predicted replacement timing with respect to the input reagents (consumables) of the processing module.

According to this method, the user can respectively grasp the replacement timing of the consumables with respect to various processing modules installed in his/her own facility. In addition, the user can grasp the replacement timing of the consumables with respect to the processing modules of which the user wants to grasp the replacement timing.

Different types of reagents (consumables) are installed in the blood cell analyzer 3, the blood coagulation analyzer 4, and the immunoassay analyzer 5 (sample analyzer). The management method for managing the replacement timing of the reagents (consumables) further receives an input indicating which reagents (consumables) are to be notified in the display condition setting area 520 shown on the right side of FIG. 15 (step S233 in FIG. 25), and provides the input reagents (consumables) of the information regarding the predicted replacement timing in the providing step (step S236 in FIG. 25).

According to this method, the user can grasp the replacement timing of various consumables installed in the sample analyzer. Further, the user can grasp the replacement timing of the consumables of which the user wants to grasp the replacement timing.

The management method for managing the replacement timing of the reagent (consumables) further includes storing the remaining amount of the reagent (consumables) in use (step S214 in FIG. 23), and the information regarding the predicted replacement timing is information based on the operation log 312 (usage record) and the remaining amount.

According to this method, the remaining amount of the reagent can be accurately grasped.

The management device 2 that manages the replacement timing of the reagents (consumables) in the blood cell analysis device 3, the blood coagulation analyzer 4, and the immunoassay analyzer 5 (sample analyzer) includes the controller 301, the storage 310, the display 302, and the input unit 303 (the display 302 and the input unit 303 is an interface for inputting and outputting information). The controller 301 stores an operation log (usage record) of a reagent (consumables) in the storage 310, receives, via the input unit 303 (interface), an input of a desired period among a plurality of periods including a period longer than a day and a period of a day or shorter, and provides, via the display 302 (interface), information regarding the predicted replacement timing of the reagent (consumables) during the desired period based on the operation log (usage record).

As described above, the period in which the replacement timing of the consumables is desired to be grasped is different for each of the various users. On the other hand, according to the configuration of the management device 2, it is possible to receive an input of a desired period from each user and to provide the user the timing at which the replacement timing may arrive during the desired period. Therefore, it is possible to flexibly respond to the requirements of each user regarding the predicted replacement timing of the consumables.

The sample analysis system 1 includes the blood cell analyzer 3, the blood coagulation analyzer 4, and the immunoassay analyzer 5 (a plurality of sample analyzers), and the management device 2 that manages the replacement timing of reagents (consumables) in each of the sample analyzers. The management device 2 includes the controller 301, the storage 310, the display 302, and an input unit 303 (the display 302 and an input unit 303 is an interface for an input and an output of information). The controller 301 acquires the operation log (usage record) of the reagent (consumables) from each of the sample analyzers and stores the operation log (usage record) in the storage 310, receives, via the input unit 303 (interface), an input of a desired period among multiple periods including a period longer than a day and a period of a day or shorter, and provides, via the display 302 (interface), information regarding the predicted replacement timing of the reagent (consumables) during the desired period based on the operation log (usage record).

As described above, the period in which the replacement timing of the consumables is desired to be grasped is different for each of the various users. On the other hand, according to the configuration of the sample analysis system 1, it is possible to receive the input of the desired period from each user and to provide the user the timing at which the replacement timing may arrive during the desired period. Therefore, it is possible to flexibly respond to the requirements of each user regarding the predicted replacement timing of the consumables.

A program 315 that causes the management device 2 to execute a process of managing a replacement timing of a reagent (consumables) in the blood cell analyzer 3, the blood coagulation analyzer 4, and the immunoassay analyzer 5 (sample analyzer) stores an operation log (usage record) of the reagent (consumables), receives an input of a desired period among a plurality of periods including a period longer than a day and a period of a day or shorter, and provides information regarding the predicted replacement timing of the reagent (consumables) in the desired period based on the operation log 312 (usage record).

As described above, the period in which the replacement timing of the consumables is desired to be grasped is different for each of the various users. On the other hand, according to the configuration of the program 315, it is possible to provide the computer with a function of receiving the input of the desired period from each user and providing the user the timing at which the replacement timing may arrive during the desired period. Therefore, it is possible to flexibly respond to the requirements of each user regarding the predicted replacement timing of the consumables.

### <First modification>

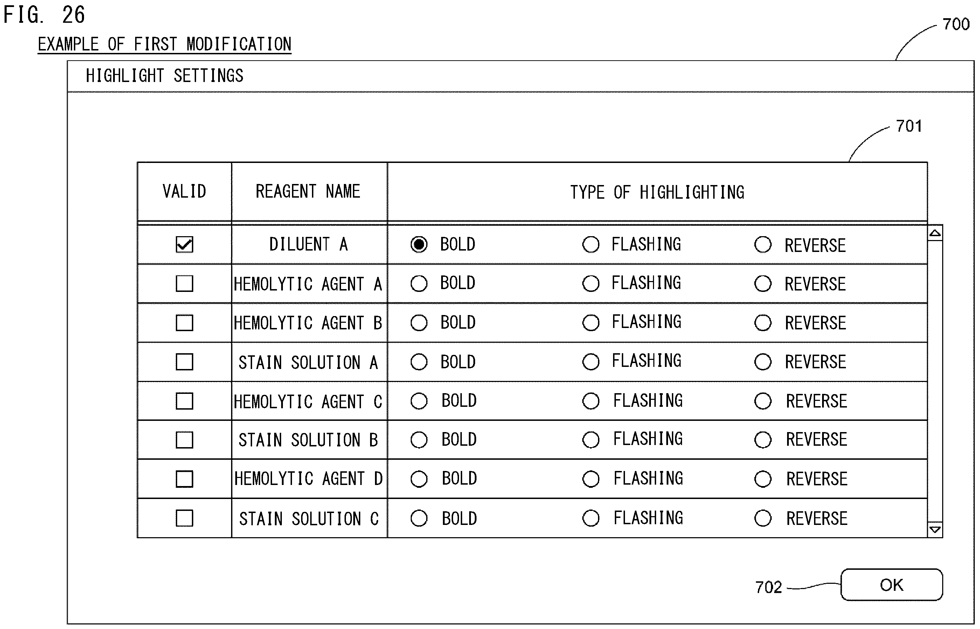

In the above embodiment, the predicted replacement timing in the calendar area 610 was displayed for each reagent in the same manner. An indication of the predicted replacement timing for a given reagent may be different from the other reagents. Hereinafter, the configuration and control of the present modification will be described with reference to FIGS. 26 to 28. Other configurations and controls of the present modification example are the same as those of the above-described embodiment.

FIG. 26 is a diagram schematically illustrating a configuration of a highlight setting screen 700.

The controller 301 of the management device 2 displays the highlight setting screen 700 on the display 302 in response to the user's instruction input via the input unit 303, and performs various kinds of processing based on the highlight setting screen 700.

The highlight setting screen 700 includes a setting area 701 and an OK button 702.

The setting area 701 includes items of valid, reagent name, and type of highlight for each reagent stored in the reagent database for each processing module (see FIG. 10). The item "Valid" includes a check box indicating whether or not the highlighting of the predicted replacement timing is valid. The user can enable or disable the highlighting of the predicted replacement timing by operating the check box. The "Type of Highlight" item includes a radio button for setting a form of a display of the predicted replacement timing to one of bold, blinking, and inverted.

The user sets the enablement or the disablement and the type of highlight in the setting area 701 and then operates the OK button 702. Thus, the controller 301 of the management device 2 stores the contents set on the highlight setting screen 700 in the storage 310.

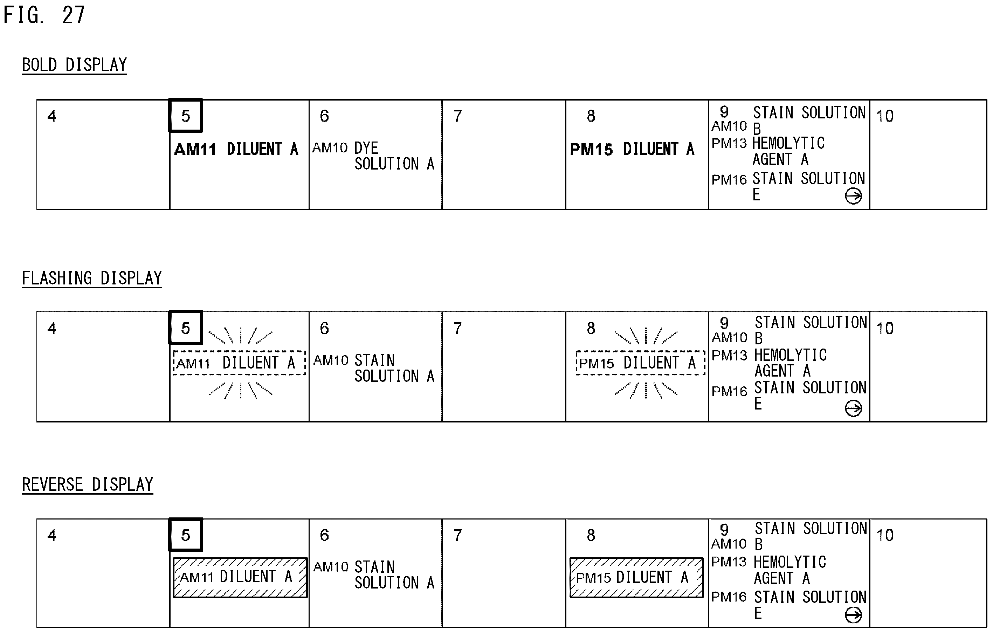

FIG. 27 is a diagram schematically illustrating a state in which the predicted replacement timing is highlighted.

FIG. 27 shows a part of the calendar area 610 of the month display displayed on the predicted replacement timing screen 600. In the examples shown in the upper, middle, and lower sections of FIG. 27, the predicted replacement timing for the diluent A is highlighted in bold, blinking, and inverted, respectively.

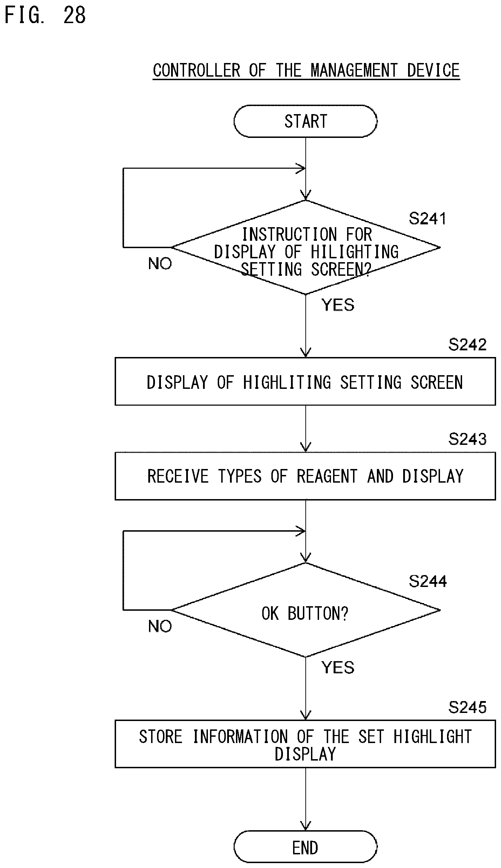

FIG. 28 is a flowchart illustrating a highlight reception process performed by the management device 2.

The processing illustrated in the flowchart of FIG. 28 is performed by the controller 301 of the management device 2 executing the program 315 (see FIG. 4).

In step S241, the controller 301 of the management device 2 determines whether or not a display instruction of the highlight setting screen 700 has been input by the user. When the display instruction of the highlight setting screen 700 is input (step S241: YES), in step S242, the controller 301 displays the highlight setting screen 700 on the display 302. In step S243, the controller 301 receives the setting of highlight for each reagent via the highlight setting screen 700. In step S244, the controller 301 determines whether or not the OK button 702 has been operated by the user.

When the OK button 702 is operated by the user (step S244: YES), in step S245, the controller 301 stores the information set on the highlight setting screen 700 in the storage 310.

When the information is stored, in step S236 of FIG. 25, the controller 301 highlights, on the predicted replacement timing screen 600, the predicted replacement timing of the reagent for which the highlight has been set, as shown in the diluent A of FIG. 27. In the predicted replacement timing screen 600, the controller 301 normally displays the predicted replacement timing of the reagents for which highlight is not set, as shown in the reagents other than the diluent A in FIG. 27.

Note that, in a case where the information regarding the predicted replacement timing is notified by the alarm sound, the alarm sound at the predicted replacement timing of the predetermined reagent may be output from the speaker in an emphasized state (for example, a large volume), and the alarm sound at the predicted replacement timing of the other reagent may be output from the speaker in a normal state (for example, a small volume). In this case as well, the controller 301 of the management device 2 receives, from the user in advance, a predetermined reagent in which the alarm sound is emphasized. Then, upon receiving the notification instruction of the predicted replacement timing, the controller 301 outputs an alarm sound at the predicted replacement timing of the predetermined reagent from the speaker in the emphasized state, and outputs an alarm sound at the predicted replacement timing of the other reagent from the speaker in the normal state.

### <Effects of the management method, the management device, the sample analysis system, and the program according to the first modification>

A plurality of reagents (consumables) of different types are installed in the blood cell analyzer 3, the blood coagulation analyzer 4, and the immunoassay analyzer 5 (sample analyzer), and a notification method of a reagent (consumables) of a predetermined type is made different from a notification method of a reagent (consumables) of another type in a notifying step (step S236 of FIG. 25).

According to this method, it is possible to accurately grasp that the replacement timing of the consumables is reached by specifying the consumables that require an alert in advance.

The management method for managing the replacement timing of the reagent (consumables) further includes receiving, from the user, a designation of a predetermined type of reagent (consumables) that makes the notification method different (step S243 in FIG. 28).

According to this method, the consumables to which the notification method is different can be individually designated, and thus the user can reliably recognize the notification of the consumables that need to be alerted to the user.

In the notifying step (step S236 in FIG. 25), information regarding the predicted replacement timing is notified by the display, and highlighting is applied as shown in FIG. 27 to a display item of a predetermined type of reagent (consumables) that makes the notification method different.

According to this method, the user can visually and accurately recognize that a predetermined consumable designated in advance has reached the replacement timing.

### <Second modification>

The operation of the sample analysis system 1 is not necessarily performed by a user who is familiar with the operation. For example, in a non-business hours (e.g., nights in weekdays, Saturdays, Sundays, and holidays) of a facility in which the sample analysis system 1 is installed, a user who is not familiar with the operation of the sample analysis system 1 may be in charge of a test, or a user who specializes in another test may be in charge of a type of test that is not his/her own. When it is expected that a reagent replacement will be necessary during the non-business period, it is preferable that a user who is familiar with the operation of the sample analysis system 1 finishes the reagent replacement during a prior business period.

In the present modification, when an original predicted replacement timing determined based on the reagent usage pattern information, the reagent remaining amount, and the expiration date is included in the non-business day, the new predicted replacement timing is set to the business day immediately before the non-business day. Further, in a case where the original predicted replacement timing is included in the non-business time zone, the new predicted replacement timing is set to the business time zone immediately before the non-business time zone.

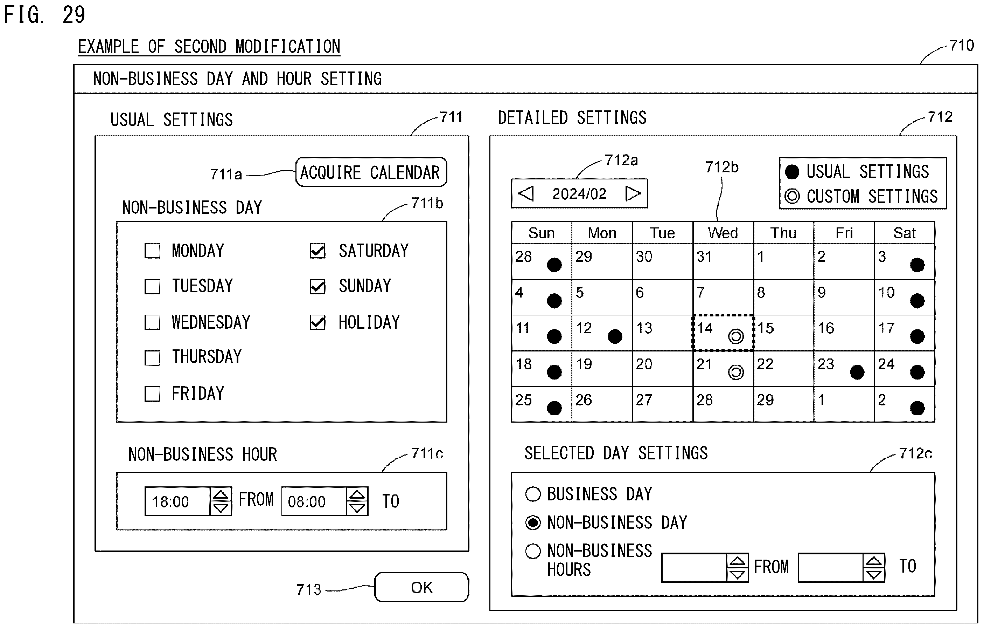

Hereinafter, the configuration and control of the present modification will be described with reference to FIGS. 29 to 31. Other configurations and controls of the present modification are the same as those of the above-described embodiment.

FIG. 29 is a diagram schematically illustrating a configuration of a non-business day and time setting screen 710.

The controller 301 of the management device 2 displays the non-business day and time setting screen 710 on the display 302 in response to a user instruction input via the input unit 303, and performs various kinds of processing based on the non-business day and time setting screen 710.

The non-business day and time setting screen 710 includes a usual setting area 711, a detailed setting area 712, and an OK button 713. The usual setting area 711 includes a calendar acquisition button 711a, a non-business day setting area 711b, and a non-business time zone setting area 711c. The detailed setting area 712 includes a period setting area 712a, a calendar area 712b, and a selected day setting area 712c.

When the calendar acquisition button 711a is operated, the controller 301 of the management device 2 acquires calendar information from a predetermined server. The predetermined server may be a server in a facility in which the sample analysis system 1 is disposed, or may be a server on the Internet. The calendar information includes a date of each month for a predetermined period of time (e.g., from the current year to one year later) and a day of the week and a holiday associated with the date. The controller 301 displays a calendar in the calendar area 712b based on the date of each month of the acquired calendar information.

The non-business day setting area 711b includes check boxes for setting Monday to Sunday and holidays of the calendar area 712b as non-business days, respectively. As illustrated in FIG. 29, when Saturdays, Sundays, and holidays are selected, the calendar area 712b is marked with black circles on Saturdays, Sundays, and holidays, and these days are set to non-business days as normal settings.

The non-business time zone setting area 711c includes two text boxes for setting the start time and the end time of the non-business time zone, respectively. The time input to the two text boxes in the non-business time zone setting area 711c is set as the start time and the end time of the non-business time zone as the normal setting.

In the period setting area 712a, a year and a month displayed in the calendar area 712b are displayed. Further, the period setting area 712a is provided with a left arrow button and a right arrow button for moving the month to be displayed in the calendar area 712b one month at a time before and after (past and future).

The selected day setting area 712c includes three radio buttons and two text boxes for changing settings of dates selected in the calendar area 712b and enclosed by the dotted lines. In a state in which a date in the calendar area 712b is selected, when a radio button corresponding to the business day or the non-business day in the selected day setting area 712c is selected, the selected date is set to the business day or the non-business day. Further, in a state in which the date of the calendar area 712b is selected, when a radio button corresponding to the non-business time zone is selected and times are entered in the two text boxes of the non-business time zone, the entered times are set as the start time and the end time of the non-business day. In a case where the custom setting is performed in the selected day setting area 712c, the corresponding date in the calendar area 712b is marked with a double circle indicating that the custom setting has been performed.

The user sets the non-business date and time on the non-business day and time setting screen 710 and then operates the OK button 713. The controller 301 of the management device 2 stores the contents set on the non-business day and time setting screen 710 in the storage 310.

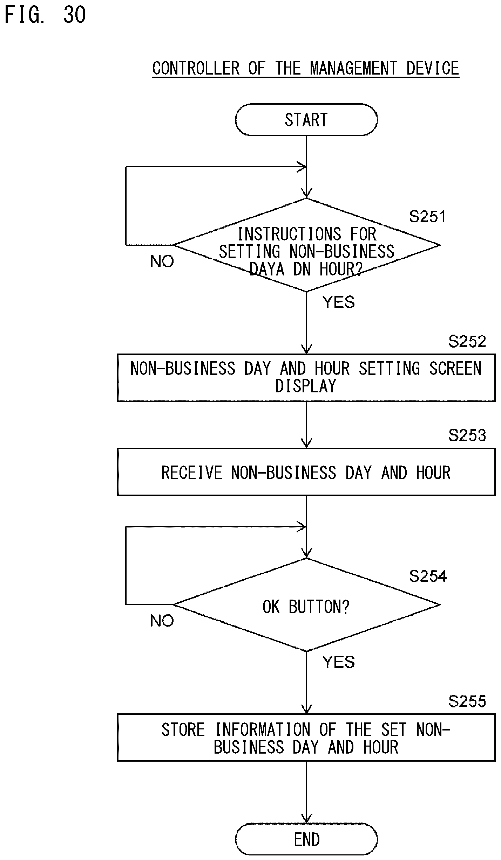

FIG. 30 is a flowchart illustrating a process of moving a predicted replacement timing by the management device 2.

The processing illustrated in the flowchart of FIG. 30 is performed by the controller 301 of the management device 2 executing the program 315 (see FIG. 4).

In step S251, the controller 301 of the management device 2 determines whether or not the user has input a display instruction of the non-business day and time setting screen 710. When the display instruction of the non-business day and time setting screen 710 is input (step S251: YES), in step S252, the controller 301 displays the non-business day and time setting screen 710 on the display 302. In step S253, the controller 301 receives the non-business date and time via the non-business day and time setting screen 710.

In step S253, the controller 301 acquires calendar information from a predetermined server in response to the operation of the calendar acquisition button 711a, and sets a non-business day of the calendar area 712b based on the holiday information (Saturday, Sunday, and holiday dates) included in the calendar information and the setting of the non-business day setting area 711b. In step S254, the controller 301 determines whether the OK button 713 has been operated by the user.

When the OK button 713 is operated by the user (step S254: YES), in step S255, the controller 301 stores the information on the non-business date and time set on the non-business day and time setting screen 710 in the storage 310.

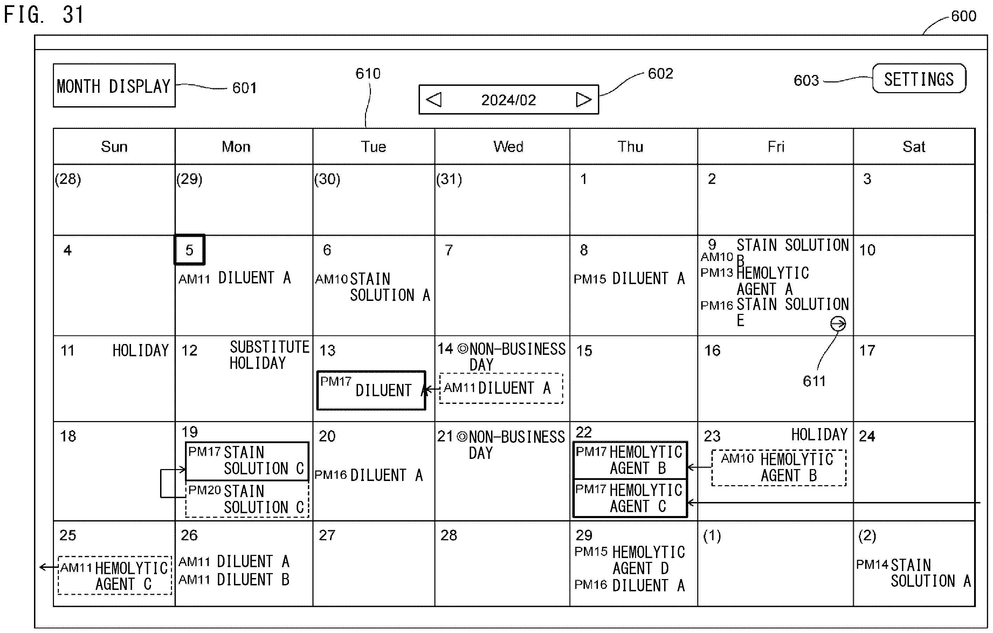

When the non-business date and time information is stored in this way, in step S236 of FIG. 25, the controller 301 moves the information regarding the original predicted replacement timing on the predicted replacement timing screen 600 as shown in FIG. 31.

FIG. 31 is a diagram schematically illustrating a configuration of the predicted replacement timing screen 600 in a case where the normal setting and the custom setting are performed on the non-business day and time setting screen 710.

In the example illustrated in FIG. 31, in the non-business day and time setting screen 710 illustrated in FIG. 29, the non-business time zone is set from 18:00 to 8:00 the next day, and Saturday, Sunday, national holidays, February 14, and February 21 are set as non-business days. In this case, as illustrated in FIG. 31, the information regarding the original predicted replacement timing on February 14 is moved to February 13, which is the immediately preceding business day. Information regarding the original predicted replacement timing at 20:00 on February 19 is moved to 17:00 on February 19, which is the last business hour before the non-business time zone. Information regarding the original predicted replacement dates of February 23 and February 25 is moved to the previous business day, which is February 22.

Information about the original predicted replacement timing is enclosed in dashed lines, and the predicted replacement timing after the movement is enclosed in bold boxes. As described above, since the display methods of the information before and after the movement are different from each other, the user can grasp both the date and time before the movement and the date and time after the movement.

In FIG. 31, the original predicted replacement timing is also displayed in the calendar area 610, but the original predicted replacement timing may be omitted.

### <Effects of the management method, the management device, the sample analysis system, and the program according to the second modification>

The management method for managing the replacement timing of the reagents (consumables) receives a setting of at least one of a non-business day and a non-business hour of a facility where the blood cell analyzer 3, the blood coagulation analyzer 4, and the immunoassay analyzer 5 (sample analyzer) are installed (step S253 in FIG. 30). As shown in FIG. 31, when the predicted replacement timing is included in at least one of the non-business day and the non-business hour within the desired period, information regarding the predicted replacement timing includes information indicating that the reagent (consumables) needs to be replaced on a business day immediately before the non-business day or on a business hour immediately before the non-business hour.

According to this method, even when the replacement timing of the consumables arrives in the non-business day or the non-business hour, the replacement timing is notified on the normal business day or the business hour in advance. As a result, a skilled user in the facility who is attending on the business day or the business hour can smoothly and appropriately perform a replacement work of the consumables.

In a step (step S253 in FIG. 30) of receiving the setting of at least one of the non-business day and the non-business hour, holiday information is obtained.

According to this method, it is not necessary to input the non-business days one by one, and thus it is possible to improve a convenience of the user.

### <Third modification>

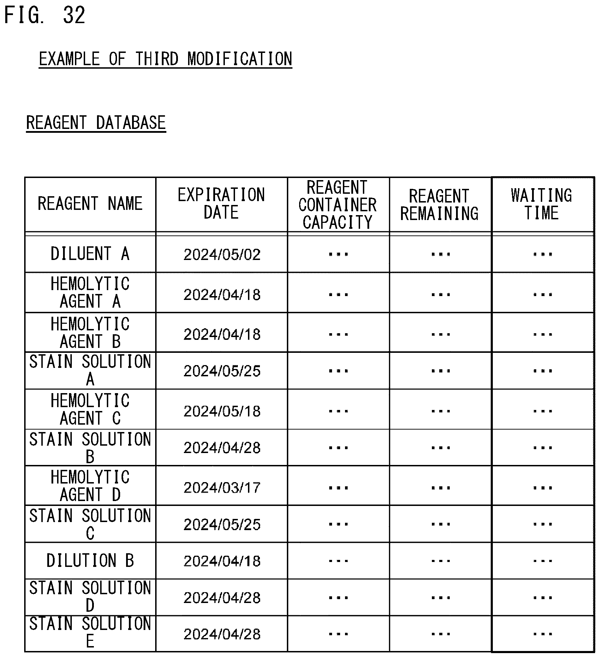

In this modification, when the information regarding the predicted replacement timing is notified (step S236 in FIG. 25), a waiting period (lead time) from an ordering of the reagents to an arrival thereof is also notified. Hereinafter, configurations and controls of the present modification will be described with reference to FIGS. 32 to 34. Other configurations and controls of the present modification example are the same as those of the above-described embodiment.

FIG. 32 is a diagram schematically illustrating a configuration of a reagent database related to reagents installed in the measurement device 120.

The reagent database of this modification further stores a waiting period in association with the reagent name as compared to the embodiment shown in FIG. 10.

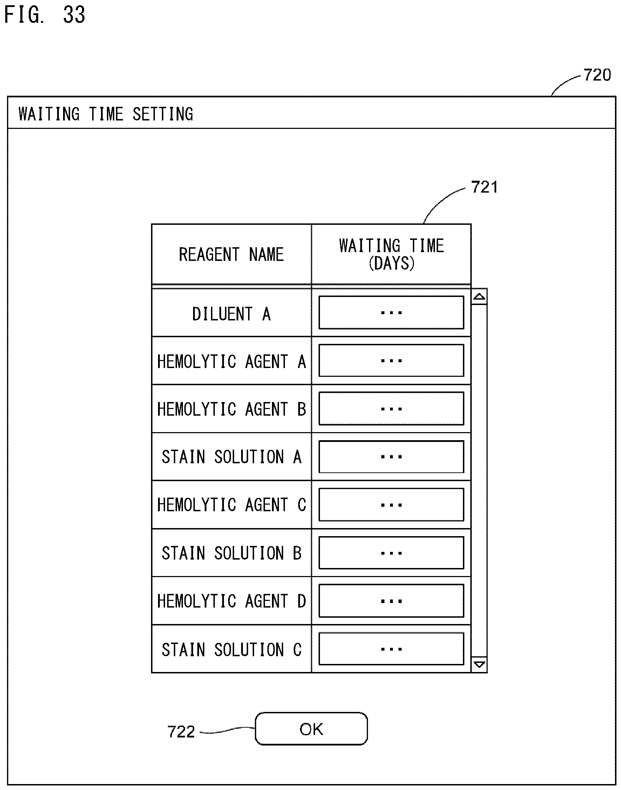

FIG. 33 is a diagram schematically illustrating a configuration of a waiting period setting screen 720.

The controller 301 of the management device 2 displays the waiting period setting screen 720 on the display 302 in response to a user instruction input via the input unit 303, and performs various kinds of processing based on the waiting period setting screen 720.

The waiting period setting screen 720 includes a setting area 721 and an OK button 722.

The setting area 721 is provided with a text box for inputting the waiting period in association with the reagent name. A unit of the waiting period is, for example, a day. The user inputs the waiting period for each reagent and operates the OK button 722. The controller 301 of the management device 2 stores the contents set on the waiting period setting screen 720 in the reagent database of the storage 310.

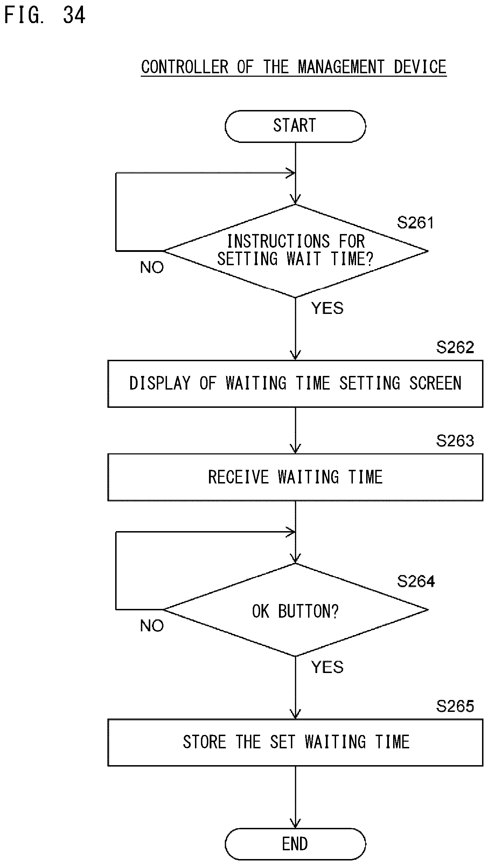

FIG. 34 is a flowchart illustrating a waiting period receiving process performed by the management device 2.

The processes illustrated in the flowchart of FIG. 34 is performed by the controller 301 of the management apparatus 2 executing the program 315 (see FIG. 4).

In step S261, the controller 301 of the management device 2 determines whether or not a display instruction of the waiting period setting screen 720 has been input by the user. When the display instruction of the waiting period setting screen 720 is input (step S261: YES), in step S262, the controller 301 displays the waiting period setting screen 720 on the display 302. In step S263, the controller 301 receives the waiting period via the waiting period setting screen 720. In step S264, the controller 301 determines whether or not the OK button 722 has been operated by the user.

When the OK button 722 is operated by the user (step S264: YES), in step S265, the controller 301 stores information of the waiting period set on the waiting period setting screen 720 in the reagent database in the storage 310.

When the information regarding the waiting period is stored in this way, in step S236 of FIG. 25, the controller 301 displays the predicted replacement timing and the waiting period on the predicted replacement timing screen 600.

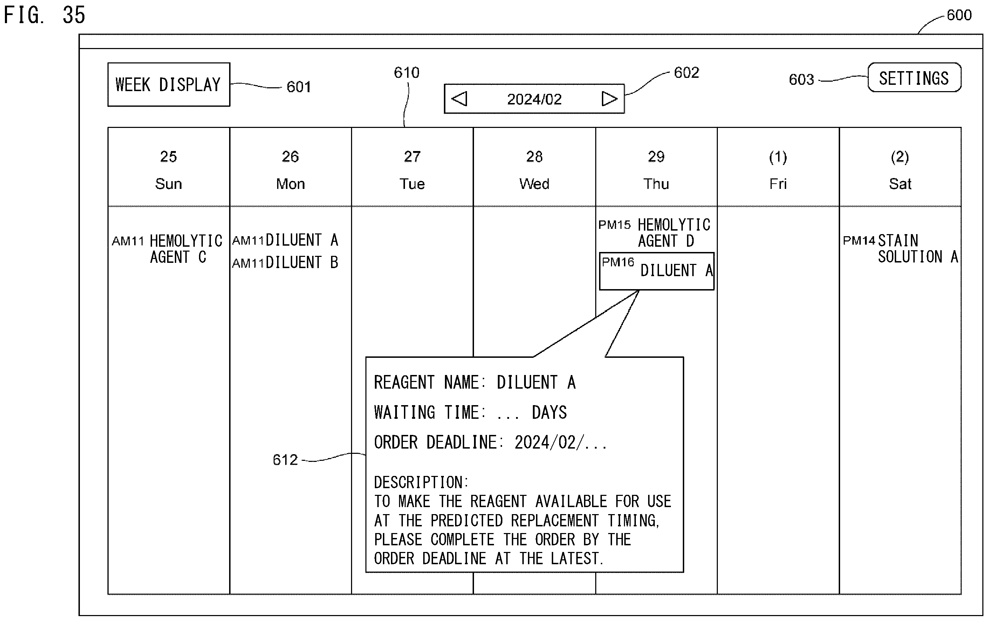

FIG. 35 is a diagram schematically illustrating a configuration of the predicted replacement timing screen 600 in a case where the waiting period is set on the waiting period setting screen 720.

The example illustrated in FIG. 35 shows a state in which the waiting period of the diluent A is set in the waiting period setting screen 720 illustrated in FIG. 33, and the user has selected information regarding the predicted replacement timing of the diluent A in the predicted replacement timing screen 600. In this case, the controller 301 of the management device 2 displays a comment area 612 with respect to the information regarding the selected predicted replacement timing. In the comment area 612, a corresponding reagent name is displayed in an item of the reagent name. In an item of the waiting period, a waiting period corresponding to the reagent name stored in the reagent database of FIG. 32 is displayed. In an item of an order deadline, a date obtained by subtracting the waiting period from the predicted replacement timing is displayed. An item of a description indicates that a purchase order needs to be completed by the order deadline.

Note that a sound corresponding to the character string in the comment area 612 may be output from a speaker of the management device 2.

### <Effects of the management method, the management device, the sample analysis system, and the program according to the Third Modification>

The management method for managing the replacement timing of the reagents (consumables) receives an input of the waiting period required from the ordering of the reagents (consumables) to the arrival thereof (step S263 in FIG. 34), and the providing of the information (step S236 in FIG. 25) further provides an indication of the waiting period of the reagents (consumables).

The user of the sample analysis system 1 includes an administrator who manages a inventory status of the reagents in a facility where the sample analysis system 1 is installed and orders the reagents. Such an administrator needs to order new reagents in advance so that new reagents can be installed smoothly when the replacement timing of the reagents arrives. According to the above-described method, when the consumables are to be replaced at the replacement timing, the user can know how long before the consumables should be ordered.

### <Fourth modification>

In the above-described embodiment, as illustrated in FIG. 16, a calendar of a month corresponding to a current date (February in the case of FIG. 16) is displayed in the calendar area 610 of the month display, but the present invention is not limited thereto, and a calendar of a month one month after the current date may be displayed.

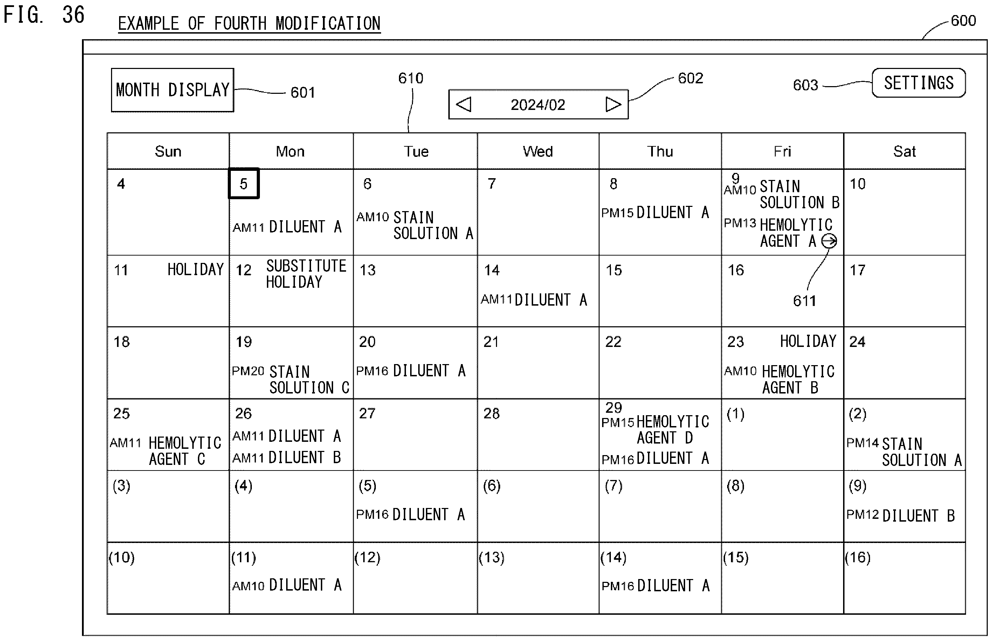

FIG. 36 is a diagram schematically illustrating a configuration of the predicted replacement timing screen 600 in a case where the month display is selected in the setting screen 500.

In this modification, the calendar area 610 is configured to always display six weeks and configured to display a current date at the top row. Thus, dates from the current date to a date one month after the current date are securely displayed within the calendar area 610. In the example illustrated in FIG. 36, the current date, which is February 5, 2024, and a date one month after the current date, which is March 5, 2024, are displayed so as to fall within the calendar area 610.

According to the present modification, when the month display is set on the setting screen 500, as shown in FIG. 36, dates from a current date to a date one after the current date are displayed in a list. Therefore, the user can smoothly grasp the predicted replacement timing from the current to one month after the current date without operating any button in the period setting area 602.

### <Fifth modification>

In the above-described embodiment, when the display button 501 is operated on the setting screen 500, the calendar area 610 is displayed on the predicted replacement timing screen 600 so as to include the current date and time. However, the present invention is not limited thereto, and the setting screen 500 may be configured to be capable of receiving a display period, and the calendar area 610 may be displayed in accordance with the received display period.

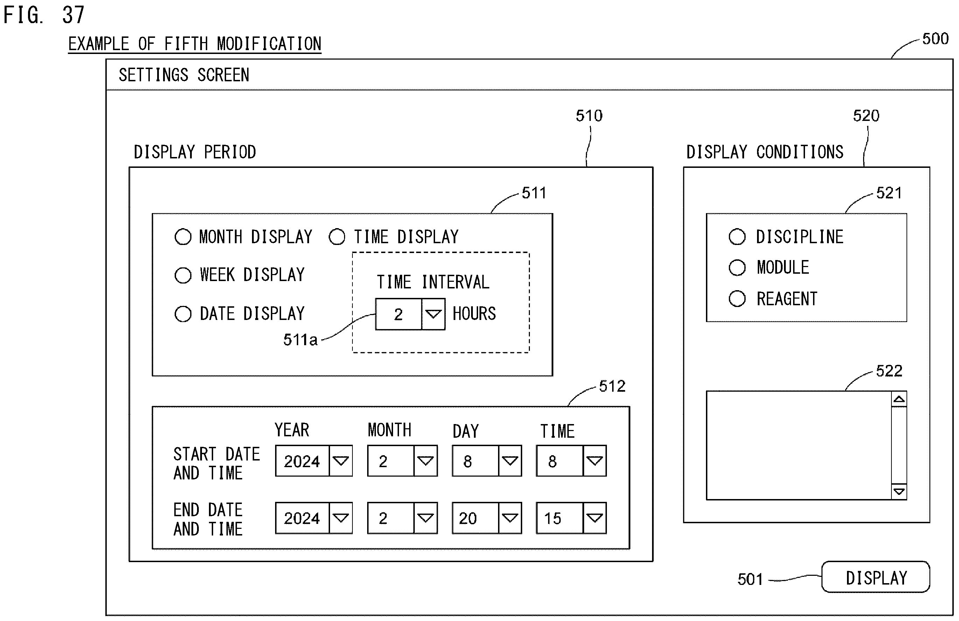

FIG. 37 is a diagram schematically illustrating a configuration of the setting screen 500.

In the setting screen 500 of the fifth modification, an area 512 for setting a display period is added to the display period setting area 510 as compared with the setting screen 500 shown in FIG. 14. The user operates each text box in the display period setting area 510 to input a start date and time and an end date and time. When the display button 501 is operated, the controller 301 of the management device 2 displays the predicted replacement timing screen 600 on the display 302 based on information set on the setting screen 500.

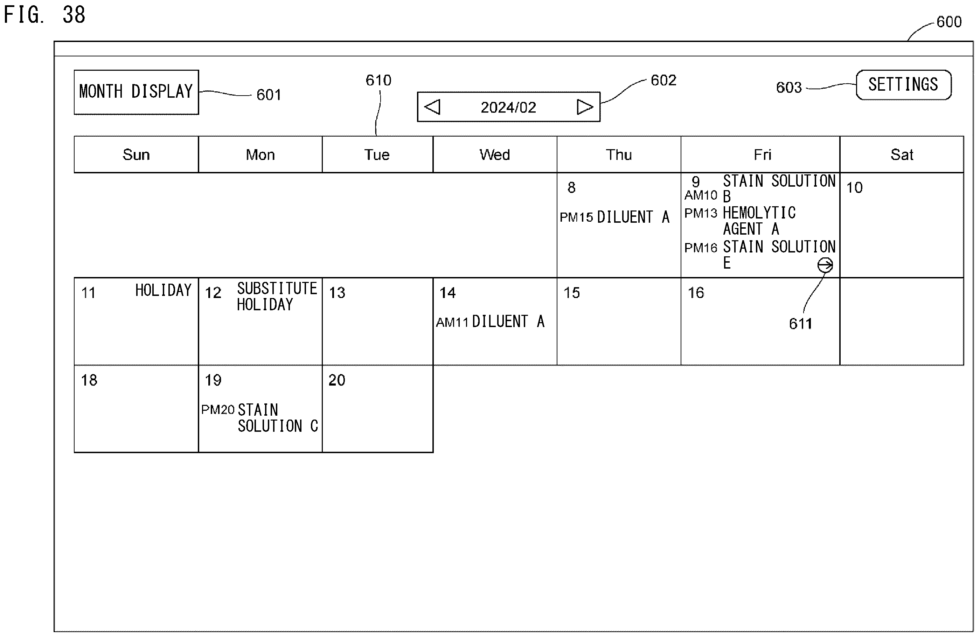

FIG. 38 is a diagram schematically illustrating a configuration of a predicted replacement timing screen 600 in a case where the month display is selected on the setting screen 500 and the start date and time and the end date and time are set.

In this case, the calendar area 610 displays information from the start date and time (8AM on February 8, 2024) to the end date and time (PM15 on February 20, 2024) in accordance with the setting input to the area 512 of FIG. 37.

According to this modification, when the start date and time and the end date and time are set on the setting screen 500, the information from the start date and time to the end date and time is displayed in the calendar area 610. Therefore, the user can smoothly grasp the information regarding the predicted replacement timing in the desired period.

### <Other modifications>

In the above-described embodiment, the controller 301 of the management device 2 obtains the predicted replacement timing of the target reagent in step S235 of FIG. 25 regardless of the display period received in step S233 of FIG. 25. However, the present invention is not limited thereto, and the controller 301 may obtain the predicted replacement timing only in the received display period. For example, the controller 301 may obtain predicted usage amounts of the reagents from the start date and time to the end date and time of the received display period, and may not obtain the predicted replacement timing for the reagents whose predicted remaining reagent amount is not zero and whose expiration period has not yet arrived at the end date and time of the display period. In this way, it is not necessary to obtain the predicted replacement timing of all the target reagents, and thus it is possible to reduce a processing load of the controller 301.

In the above-described embodiment, the date and time of the predicted replacement timing are displayed as the information regarding the predicted replacement timing, but the present invention is not limited thereto, and information indicating that the predicted replacement timing is included in the display period designated by the user or information indicating that the predicted replacement timing is not included may be displayed.

In the above-described embodiment, the date and time are displayed in the calendar area 610 of the predicted replacement timing screen 600 in a calendar format, but the present invention is not limited thereto, and the date and time may be displayed in a list format that is arranged from top to bottom.

The area 521 (see FIG. 14) of the setting screen 500 may include a radio button for selecting a measurement item. When the measurement item is selected in the area 521, check boxes for selecting a discrete mode or a measurement item that can be executed by the sample analysis system 1 is displayed in the area 522. For example, if a check box corresponding to the CBC is selected, all reagents used in the CBC are selected. As a result, the user can smoothly grasp the predicted replacement timing of the reagent used in the target discrete mode or measurement item.

The sample analysis system 1 includes the blood cell analyzer 3, the blood coagulation analyzer 4, and the immunoassay analyzer 5 as a plurality of sample analyzers, but may include other sample analyzers instead of these sample analyzers. The sample analysis system 1 may include other sample analyzers together with the sample analyzers. Examples of the other sample analyzers include a biochemical analyzer and a urine analyzer. As described above, in the case where the sample analysis system 1 includes other sample analyzers, it is possible to flexibly fulfill a user's request regarding the predicted replacement timing of a reagent installed in the other sample analyzers in the same manner as in the embodiment.

The sample analysis system 1 includes a plurality of sample analyzers, but may include only one sample analyzer. For example, the sample analysis system 1 may include only the blood cell analyzer 3 as the sample analyzer.

The reagent usage amount database 311, the operation log 312, the reagent database 313, and the reagent usage pattern information 314 are stored in the storage unit of the management device 2, and the management of the remaining reagent amount and the notification of the predicted replacement timing were performed by the management device 2. However, the present invention is not limited thereto, and the storage of these pieces of information, the management of the remaining amount of reagents, and the notification of the predicted replacement timing may be performed by a device other than the management device 2, or may be performed, for example, by the control device 110 of the blood cell analyzer 3.

Each device of the sample analysis system 1 is disposed in one facility such as a hospital, but the management device 2 may be disposed in another location outside the facility. In this case, the management device 2 communicates with the blood cell analyzer 3, the blood coagulation analyzer 4, and the immunoassay analyzer 5 via the Internet, for example.

The user operates the input unit 303 of the management device 2 to input an instruction to the management device 2, but the present invention is not limited thereto, and an instruction may be transmitted to the management device 2 via a communication terminal such as a computer or a tablet that is communicably connected to the management device 2. In this case, the screen displayed on the display 302 of the management device 2 in the above-described embodiment is displayed on the display unit of the communication terminal.

Various modifications can be made to the embodiments of the present invention as appropriate within the scope of a technical concept indicated in the claims.

The present disclosure includes following items 1-48.
Item 1. A sample analysis system comprising:
   a plurality of sample analyzers configured to analyze samples by using consumables, and
   a consumable manager configured to manage a replacement timing of the consumables in each of the sample analyzers,
   wherein the consumable manager comprises:
      a controller,
      a storage, and
      an interface for an input and an output of information,
      wherein the controller is configured to:
         obtain a usage record of the consumables from each of the sample analyzers and store the usage record in the storage,
         receive, via the interface, an input specifying a desired period among multiple periods of different lengths of time including (i) a period longer than a day and (ii) a period of a day or shorter, and
         provide, via the interface, information regarding a predicted replacement timing of the consumables during the desired period based on the usage record.
Item 2. The sample analysis system of item 1, wherein
   the controller is further configured to present the multiple periods to a user of the sample analysis system, and receive, as the input, a selection of the desired period from the presented multiple periods.
Item 3. The sample analysis system of item 1, wherein
   the period longer than a day is a period of a week or longer.
Item 4. The sample analysis system of item 1, wherein
   the multiple periods include a period of one or multiple months, a period of one or multiple weeks, a period of one or multiple days, and a period of one or multiple hours.
Item 5. The sample analysis system of item 1, wherein
   the desired period is a period including a day when the controller received the input of the desired period.
Item 6. The sample analysis system of item 1, wherein
   the controller is configured to provide the information regarding the predicted replacement timing in response to the input of the desired period.
Item 7. The sample analysis system of item 1, wherein
   the controller is configured to obtain the predicted replacement timing of the consumables based on the usage record and generate the information regarding the predicted replacement timing based on the predicted replacement timing.
Item 8. The sample analysis system of item 7, wherein
   the controller is configured to generate the information regarding the predicted replacement timing that includes timing information indicating when a replacement of the consumables will be necessary within the desired period.
Item 9. The sample analysis system of item 8, wherein
   the controller is configured to, as the providing of the information regarding the predicted replacement timing, display the desired period in a calendar format and the timing information on the desired period.
Item 10. The sample analysis system of item 7, wherein
   the controller is configured to generate usage pattern information indicating a usage pattern of the consumables in a time series based on the usage record and obtain the predicted replacement timing based on the usage pattern information.
Item 11. The sample analysis system of item 1, wherein
   the consumables are reagents.
Item 12. The sample analysis system of item 1, wherein
   the controller is configured to store an expiration date of the consumables in use in the storage, and is configured to obtain the information regarding the predicted replacement timing based on the usage record and the expiration date.
Item 13. The sample analysis system of item 1, wherein
   the sample analyzers include a blood cell analyzer, a biochemical analyzer, a blood coagulation analyzer, an immunoassay analyzer, or a urine analyzer.
Item 14. The sample analysis system of item 1, wherein
   the plurality of sample analyzers include sample analyzers of different disciplines, and
   the controller is configured to receive an input specifying a discipline and provide the information regarding the predicted replacement timing of the consumables used by the sample analyzer of the specified discipline.
Item 15. The sample analysis system of item 1, wherein
   the controller is further configured to receive an input specifying one or more of the sample analyzers and provide the information regarding the predicted replacement timing of the consumables used by the specified one or more sample analyzers.
Item 16. The sample analysis system of item 1, wherein
   at least one of the sample analyzers is configured to use multiple types of consumables, and
   the controller is configured to receive an input specifying a type of consumable and provide the information regarding the predicted replacement timing of the consumable of the type specified.
Item 17. The sample analysis system of item 1, wherein
   at least one of the sample analyzers is configured to use multiple types of consumables including a predetermined type of consumable and other type of consumable, and
   the controller is configured to provide the information regarding the predicted replacement timing for the predetermined type of consumable in a first manner and provide the information regarding the predicted replacement timing for the other type of consumable in a second manner.
Item 18. The sample analysis system of item 17, wherein
   the controller is further configured to receive a designation of the predetermined type of consumable.
Item 19. The sample analysis system of item 17, wherein
   the controller is configured to display the information regarding the predicted replacement timing, a display item of the predetermined type of consumable being highlighted.
Item 20. The sample analysis system of item 7, wherein
   the controller is configured to receive a setting of at least one of a non-business day and a non-business hour of a facility where the specimen analyzers are installed, and
   in response to the predicted replacement timing falling within at least one of the non-business day and the non-business hour, the controller provides the information regarding the predicted replacement timing includes information indicating that the replacement of the consumables is necessary on a business day immediately before the non-business day or a business hour immediately before the non-business hour.
Item 21. The sample analysis system of item 20, wherein
   the controller is configured to obtain holiday information in the receiving of the setting of the at least one of the non-business day and the non-business hour.
Item 22. The sample analysis system of item 1, wherein
   the controller is configured to receive an input of a lead time required from order of consumables until delivery, and is configured to provide the lead time.
Item 23. The sample analysis system of item 1, wherein
   the controller is configured to store a remaining amount of the consumables in use in the storage, and configured to provide the information regarding the predicted replacement timing of the consumables based on the usage record and the remaining amount.
Item 24. A consumable manager configured to manage a replacement timing of consumables in each of a plurality of sample analyzers, comprising:
   a controller,
   a storage, and
   an interface for an input and an output of information,
   wherein the controller is configured to:
      obtain a usage record of the consumables from each of the sample analyzers and store the usage record in the storage,
      receive, via the interface, an input specifying a desired period among multiple periods of different lengths of time including (i) a period longer than a day and (ii) a period of a day or shorter, and
      provide, via the interface, information regarding a predicted replacement timing of the consumables during the desired period based on the usage record.
Item 25. The consumable manager of item 24, wherein
   the controller is configured to present the multiple periods to a user of the sample analysis system, and accept, as the input, a selection of the desired period from the presented multiple periods.
Item 26. The consumable manager of item 24, wherein
   the period longer than a day is a period of a week or longer.
Item 27. The consumable manager of item 24, wherein
   the multiple periods include a period of one or multiple months, a period of one or multiple weeks, a period of one or multiple days, and a period of one or multiple hours.
Item 28. The consumable manager of item 24, wherein
   the desired period is a period including a day when the controller received the input of the desired period.
Item 29. The consumable manager of item 24, wherein
   the controller is configured to provide the information regarding the predicted replacement timing in response to the input of the desired period.
Item 30. The consumable manager of item 24, wherein
   the controller is further configured to obtain the predicted replacement timing of the consumables based on the usage record and generate the information regarding the predicted replacement timing based on the predicted replacement timing.
Item 31. The consumable manager of item 30, wherein
   the controller is configured to generate the information regarding the predicted replacement timing that includes timing information indicating when a replacement of the consumables will be necessary within the desired period.
Item 32. The consumable manager of item 31, wherein
   the controller is configured to display the desired period in a calendar format and the timing information on the desired period.
Item 33. The consumable manager of item 30, wherein
   the controller is configured to generate usage pattern information indicating a usage pattern of the consumables in a time series based on the usage record and obtain the predicted replacement timing based on the usage pattern information.
Item 34. The consumable manager of item 24, wherein
   the consumables are reagents.
Item 35. The consumable manager of item 24, wherein
   the controller is further configured to store an expiration date of the consumables in use in the storage, and obtain the information regarding the predicted replacement timing based on the usage record and the expiration date.
Item 36. The consumable manager of item 24, wherein
   the sample analyzers include a blood cell analyzer, a biochemical analyzer, a blood coagulation analyzer, an immunoassay analyzer, or a urine analyzer.
Item 37. The consumable manager of item 24, wherein
   the plurality of sample analyzers include sample analyzers of different disciplines, and
   the controller is further configured to receive an input specifying a discipline and provide the information regarding the predicted replacement timing of the consumables used by the sample analyzer of the discipline specified by the input.
Item 38. The consumable manager of item 24, wherein
   the controller is further configured to receive an input specifying one or more of sample analyzer and provide the information regarding the predicted replacement timing of the consumables used by the one or more of the sample analyzer specified by the input.
Item 39. The consumable manager of item 24, wherein
   at least one of the sample analyzers is configured to use multiple types of consumables, and
   the controller is further configured to receive an input specifying type of consumable and provide the information regarding the predicted replacement timing of the consumables specified by the input.
Item 40. The consumable manager of item 24, wherein
   at least one of the sample analyzers is configured to use multiple types of consumables including a predetermined type of consumable and other type of consumable, and
   the controller is configured to provide the information regarding the predicted replacement timing for the predetermined type of consumable in a first manner and the information regarding the predicted replacement timing for the predetermined type of consumable in a second manner.
Item 41. The consumable manager of item 40, wherein
   the controller is further configured to receive a designation of the predetermined type of consumable.
Item 42. The consumable manager of item 40, wherein
   the controller is configured to display the information regarding the predicted replacement timing, a display item of the predetermined type of consumable being highlighted.
Item 43. The consumable manager of item 30, wherein
   the controller is further configured to receive a setting of at least one of a non-business day and a non-business hour of a facility where the specimen analyzers are installed, and
   in response to the predicted replacement timing falling within at least one of the non-business day and the non-business hour, the controller provides the information regarding the predicted replacement timing includes information indicating that the replacement of the consumables is necessary on a business day immediately before the non-business day or a business hour immediately before the non-business hour.
Item 44. The consumable manager of item 43, wherein
   the controller is configured to obtain holiday information in the receiving of the setting of the at least one of the non-business day and the non-business hour.
Item 45. The consumable manager of item 24, wherein
   the controller is further configured to receive an input of a lead time required from order of consumables to delivery, and is configured to provide the lead time.
Item 46. The consumable manager of item 24, wherein
   the controller is further configured to store a remaining amount of the consumables in use in the storage, and configured to provide the information regarding the predicted replacement timing of the consumables based on the usage record and the remaining amount.
Item 47. A consumable management method for managing a replacement timing of consumables in each of a plurality of sample analyzers, comprising:
   storing a usage record of the consumables obtained from each of the sample analyzers,
   accepting an input of a desired period among multiple periods including a period longer than a day and a period of a day or shorter, and
   notifying information regarding a predicted replacement timing of the consumables during the desired period based on the usage record.
Item 48. A program for causing a computer to execute processes to manage a replacement timing of consumables in each of a plurality of sample analyzers, comprising:
   storing a usage record of the consumables obtained from each of the sample analyzers,
   accepting an input of a desired period among multiple periods including a period longer than a day and a period of a day or shorter, and
   notifying information regarding a predicted replacement timing of the consumables during the desired period based on the usage record.

## Claims

1. A sample analysis system comprising:
a plurality of sample analyzers configured to analyze samples by using consumables, and
a consumable manager configured to manage a replacement timing of the consumables in each of the sample analyzers,
wherein the consumable manager comprises:
a controller,
a storage, and
an interface for an input and an output of information,
wherein the controller is configured to:
obtain a usage record of the consumables from each of the sample analyzers and store the usage record in the storage,
receive, via the interface, an input specifying a desired period among multiple periods of different lengths of time including (i) a period longer than a day and (ii) a period of a day or shorter, and
provide, via the interface, information regarding a predicted replacement timing of the consumables during the desired period based on the usage record.

2. The sample analysis system of claim 1, wherein
the controller is further configured to present the multiple periods to a user of the sample analysis system, and receive, as the input, a selection of the desired period from the presented multiple periods.

3. The sample analysis system of claim 1 or 2, wherein
the period longer than a day is a period of a week or longer.

4. The sample analysis system of any one of claims 1 to 3, wherein
the controller is configured to obtain the predicted replacement timing of the consumables based on the usage record and generate the information regarding the predicted replacement timing based on the predicted replacement timing.

5. The sample analysis system of claim 4, wherein
the controller is configured to generate the information regarding the predicted replacement timing that includes timing information indicating when a replacement of the consumables will be necessary within the desired period.

6. The sample analysis system of claim 4, wherein
the controller is configured to generate usage pattern information indicating a usage pattern of the consumables in a time series based on the usage record and obtain the predicted replacement timing based on the usage pattern information.

7. The sample analysis system of any one of claims 1 to 6, wherein
the controller is configured to store an expiration date of the consumables in use in the storage, and is configured to obtain the information regarding the predicted replacement timing based on the usage record and the expiration date.

8. The sample analysis system of any one of claims 1 to 7, wherein
the plurality of sample analyzers include sample analyzers of different disciplines, and
the controller is configured to receive an input specifying a discipline and provide the information regarding the predicted replacement timing of the consumables used by the sample analyzer of the specified discipline.

9. The sample analysis system of any one of claims 1 to 8, wherein
the controller is further configured to receive an input specifying one or more of the sample analyzers and provide the information regarding the predicted replacement timing of the consumables used by the specified one or more sample analyzers.

10. The sample analysis system of any one of claims 1 to 9, wherein
at least one of the sample analyzers is configured to use multiple types of consumables, and
the controller is configured to receive an input specifying a type of consumable and provide the information regarding the predicted replacement timing of the consumable of the type specified.

11. The sample analysis system of any one of claims 1 to 10, wherein
at least one of the sample analyzers is configured to use multiple types of consumables including a predetermined type of consumable and other type of consumable, and
the controller is configured to provide the information regarding the predicted replacement timing for the predetermined type of consumable in a first manner and provide the information regarding the predicted replacement timing for the other type of consumable in a second manner.

12. The sample analysis system of claim 4, wherein
the controller is configured to receive a setting of at least one of a non-business day and a non-business hour of a facility where the specimen analyzers are installed, and
in response to the predicted replacement timing falling within at least one of the non-business day and the non-business hour, the controller provides the information regarding the predicted replacement timing includes information indicating that the replacement of the consumables is necessary on a business day immediately before the non-business day or a business hour immediately before the non-business hour.

13. The sample analysis system of any one of claims 1 to 12, wherein
the controller is configured to receive an input of a lead time required from order of consumables until delivery, and is configured to provide the lead time.

14. The sample analysis system of any one of claims 1 to 13, wherein
the controller is configured to store a remaining amount of the consumables in use in the storage, and configured to provide the information regarding the predicted replacement timing of the consumables based on the usage record and the remaining amount.

15. A consumable manager configured to manage a replacement timing of consumables in each of a plurality of sample analyzers, comprising:
a controller,
a storage, and
an interface for an input and an output of information,
wherein the controller is configured to:
obtain a usage record of the consumables from each of the sample analyzers and store the usage record in the storage,
receive, via the interface, an input specifying a desired period among multiple periods of different lengths of time including (i) a period longer than a day and (ii) a period of a day or shorter, and
provide, via the interface, information regarding a predicted replacement timing of the consumables during the desired period based on the usage record.
